(19) Europäisches Patentamt / European Patent Office / Office européen des brevets

(11) **EP 4 178 294 A1**

(12) **EUROPEAN PATENT APPLICATION**
published in accordance with Art. 153(4) EPC

(43) Date of publication:
**10.05.2023  Bulletin 2023/19**

(21) Application number: **21846010.3**

(22) Date of filing: **15.07.2021**

(51) International Patent Classification (IPC):
**H04W 72/04** $^{(2023.01)}$

(52) Cooperative Patent Classification (CPC):
**H04W 72/04; H04W 72/54**

(86) International application number:
**PCT/CN2021/106454**

(87) International publication number:
**WO 2022/017250 (27.01.2022 Gazette 2022/04)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **20.07.2020  CN 202010699812
25.12.2020  CN 202011568911**

(71) Applicant: **Huawei Technologies Co., Ltd.
Longgang District,
Shenzhen,
Guangdong 518129 (CN)**

(72) Inventors:
• **HE, Hongli
Shenzhen, Guangdong 518129 (CN)**
• **LI, Xueru
Shenzhen, Guangdong 518129 (CN)**

(74) Representative: **Maiwald GmbH
Engineering
Elisenhof
Elisenstrasse 3
80335 München (DE)**

(54) **METHOD AND APPARATUS FOR BEAM TRAINING**

(57)   This application provides a beam training method and apparatus. A first device receives first configuration information used for beam training, and may determine, based on the first configuration information, L codewords associated with M reference signals. The first device may measure the M reference signals, determine V codewords in the L codewords based on a measurement result, and report first indication information indicating the V codewords. In this way, a device receiving the first indication information can determine an effective beam based on the V codewords, so that beam training can be implemented.

FIG. 2

**Description**

This application claims priority to Chinese Patent Application No. 202011568911.6, filed with the China National Intellectual Property Administration on December 25, 2020 and entitled "BEAM TRAINING METHOD AND APPARATUS" and Chinese Patent Application No. 202010699812.5, filed with the China National Intellectual Property Administration on July 20, 2020 and entitled "CSI REPORTING METHOD", which are incorporated herein by reference in their entireties.

**TECHNICAL FIELD**

This application relates to the communications field, and more specifically, to a beam training method and apparatus in the communications field.

**BACKGROUND**

With development of communications technologies, to improve a network throughput, a millimeter-wave band needs to be used to obtain more resources. However, attenuation of the millimeter-wave band is relatively large, and devices need to perform beam pairing through beamforming (beam forming) to improve a gain of a channel. Therefore, a beam determining method is urgently required.

**SUMMARY**

Embodiments of this application provide a beam training method and apparatus, so that a second device can determine a beam.

According to a first aspect, a beam training method is provided. The method may be performed by a first device, and the first device may be an apparatus, for example, a chip system, that can support a function required by the first device to implement the method. The method includes: The first device receives first configuration information used for beam training. The first configuration information is used to configure L codewords associated with M reference signals, each of the M reference signals is associated with at least one of the L codewords, and M and L are positive integers.

The first device sends first indication information. The first indication information indicates V codewords in the L codewords, V is a positive integer less than or equal to L, and the first indication information is determined by the first device based on measurement of the M reference signals and the L codewords.

In the foregoing solution, the first device receives the first configuration information used for beam training, and may determine, based on the first configuration information, the L codewords associated with the M reference signals. The first device may measure the M reference signals, determine the V codewords from the L codewords based on a measurement result, and report the first indication information indicating the V codewords. In this case, a device that receives the first indication information may determine an effective beam based on the V codewords.

Further, the L codewords correspond to L beams, and the device that receives the first indication information has a correspondence between the L codewords and the L beams. In this case, the device that receives the first indication information may determine V effective beams based on the V codewords. The V effective beams are different or some of the beams are the same. The device that receives the first indication information may further select, from the V effective beams, a beam for sending a signal.

The beam mentioned in this embodiment of this application is a beam used by a second device to send a signal to the first device, namely, a transmission beam of the second device.

Optionally, the first device may measure some or all of the M reference signals to determine the first indication information.

Optionally, the M reference signals may be configured by using the first configuration information or configured by using other configuration information different from the first configuration information. This is not limited in this application. In other words, the first configuration information may be used to configure the M reference signals and the L codewords associated with the M reference signals, or the first configuration information may be used to configure only the L codewords associated with the M reference signals, and the M reference signals are configured by using other configuration information.

Optionally, the M reference signals are in a one-to-one correspondence with M beam groups.

With reference to the first possible implementation of the first aspect, in a second possible implementation, the first configuration information includes M first fields, and the M first fields are separately used to carry the codewords associated with the M reference signals.

In the foregoing solution, the M first fields included in the first configuration information are separately used to carry the codewords associated with the M reference signals. In this way, the codewords associated with the M reference signals can be directly carried in the M first fields.

Optionally, if reference signals are associated with a same codeword, the first configuration information includes a field, and the field carries the codeword associated with the reference signals.

With reference to the first or the second possible implementation of the first aspect, in a third possible implementation, that the first indication information indicates V codewords in the L codewords is specifically:

The first indication information includes indexes of the V codewords, and an index of the ith codeword associated with the mth reference signal in the M reference signals is $\sum_{n=1}^{m-1} R_n + (i-1)$ or $\sum_{n=1}^{m-1} R_n + i$, where $i = 1,2,...,R_m$. $R_m$ is a quantity of codewords associated with the mth reference signal, and $m = 1,2,...,M$.

With reference to any one of the first to the third possible implementations of the first aspect, in a fourth possible implementation, that the first indication information indicates V codewords in the L codewords is specifically:

The first indication information indicates indexes of W reference signals and indexes of codewords associated with all of the W reference signals. The wth reference signal in the W reference signals is associated with indexes of $v_w$ codewords, the W reference signals are reference signals in the M reference signals, $v_w$ is a positive integer, and $\sum_{w=1}^{W} v_w = V$.

In the foregoing solution, one reference signal may be bound to one beam group, and the first indication information indicates the indexes of the W reference signals and the indexes of the codewords associated with all of the W reference signals. The device that receives the first indication information may determine W beam groups based on the W reference signals, and may determine V effective beams from the W beam groups based on the indexes of the codewords associated with the reference signals.

Optionally, W=V, and $v_w$=1, to be specific, one beam group includes one effective beam, and the device that receives the first indication information may determine a total of W or V effective beams.

Optionally, W is less than V, and one $v_w$ is greater than 1, to be specific, one beam group that includes more than one effective beam exists, and the device that receives the first indication information may determine W beam groups based on the indexes of the W reference signals. If $v_w$ corresponding to one reference signal is greater than 1, the device that receives the first indication information determines, based on indexes of $v_w$ codewords, a plurality of effective beams from one beam group corresponding to the reference signal.

With reference to any one of the first to the fourth possible implementations of the first aspect, in a fifth possible implementation, the method further includes: The first device sends third indication information. The third indication information indicates at least one of first amplitude information and first energy information that correspond to the V codewords.

In this case, a device that receives the third indication information may determine a gain of the effective beam based on the at least one of the first amplitude information and the first energy information that correspond to the V codewords.

With reference to any one of the first to the fifth possible implementations of the first aspect, in a sixth possible implementation, the mth reference signal in the M reference signals has two ports, and the first device measures the mth reference signal based on the following assumptions:

A sent signal of a first port in the two ports is determined based on s1; and/or
a sent signal of a second port in the two ports is determined based on $t_i \times s_2$, where $t_i$ is associated with the ith codeword of the mth reference signal, and $i = 1,2,...,R_m$.
s1 and s2 are complex numbers determined based on reference signal sequences of the two ports.

Optionally, that $t_i$ is associated with the ith codeword of the mth reference signal may mean that $t_i$ is the ith codeword of the mth reference signal or a form of the ith codeword of the mth reference signal is related to $t_i$.

Optionally, that the mth reference signal has two ports may mean that the mth reference signal occupies resources of the two ports and signals sent by using a plurality of beams on the two ports jointly constitute one reference signal. In this case, when one beam group includes at least two beams, the first device may measure a plurality of beams based on a measurement result of one reference signal received on the resources of the two ports, so that resource overheads can be reduced.

With reference to any one of the first to the sixth possible implementations of the first aspect, in a seventh possible implementation, the first configuration information includes a quantity $R_m$ of codewords associated with the mth reference signal in the M reference signals, $R_m$ is used to configure $R_m$ codewords associated with the mth reference signal, $R_m$ is a positive integer less than or equal to L, m is a positive integer less than or equal to M, and $\sum_{m=1}^{M} R_m = L$.

In the foregoing solution, there is a correspondence between a codeword quantity and a codeword, and the first device determines the codeword based on the codeword quantity configured by using the first configuration information.

With reference to the seventh possible implementation of the first aspect, in an eighth possible implementation, that $R_m$ is used to configure $R_m$ codewords associated with the mth reference signal is specifically:

The ith codeword in the $R_m$ codewords is determined based on $t_i = A \times \exp(j \times x_i)$. $x_i = \alpha + 2\pi(i-1)/R_m$, and $i = 1,2,...,R_m$. $\alpha$ is a constant in $[0,2\pi]$, A is a complex constant, and $j = \sqrt{-1}$.

With reference to the seventh possible implementation of the first aspect, in a ninth possible implementation, specifically,

$R_m$ and a quantity M of reference signals are used to determine the $R_m$ codewords associated with the mth reference signal.

With reference to the ninth possible implementation of the first aspect, in a tenth possible implementation, that $R_m$ and a quantity M of reference signals are used to determine the $R_m$ codewords associated with the mth reference signal is specifically:

The ith codeword in the $R_m$ codewords associated with the mth reference signal is determined based on $t_i = A \times \exp(j \times x_i + j \times \theta_m)$, $\theta_m$ is a value in $[0,2\pi]$, $\theta_m$ is a value related to m and M, $\alpha$ is a constant in $[0,2\pi]$, A is a complex number, and $j = \sqrt{-1}$. $x_i = \alpha + 2\pi(i - 1)/R_m$, and $i = 1,2,...,R_m$.

With reference to the tenth possible implementation of the first aspect, in an eleventh possible implementation, $\theta_m = 2m\pi/Y$, where Y is a prime number greater than or equal to M and maxm $R_m$, and maxm $R_m$ represents a largest value in $R_1,R_2,...,R_M$; or if $R_1 = R_2 =...= R_M = R$, $\theta_m = 2m\pi/MR$, and m =1,2,...,M.

Optionally, in the foregoing solution, a codeword may be in a row vector form or a column vector form, to be specific, the ith codeword in the $R_m$ codewords is in a form of $B \times [1;t_i]$ or $B \times [1,t_i]$. B is a complex constant.

With reference to any one of the first to the eleventh possible implementations of the first aspect, in a twelfth possible implementation, that each of the M reference signals is associated with at least one of the L codewords is specifically:

At least one of the M reference signals is associated with at least two of the L codewords.

In the foregoing solution, because the L codewords correspond to the L beams, and one reference signal is associated with at least two codewords, which equivalently means that one reference signal is associated with at least two beams, the first device may measure one reference signal to implement measurement of at least two beams, so that time can be saved, and reference signal overheads can be reduced.

With reference to any one of the first to the twelfth possible implementations of the first aspect, in a thirteenth possible implementation, at least one of the L codewords that is associated with each of the M reference signals is different from each other. In other words, there are no same codewords in the at least one codeword associated with each reference signal, so that one beam group associated with one reference signal can be distinguished by using different codewords.

With reference to any one of the first to the thirteenth possible implementations of the first aspect, in a fourteenth possible implementation, the M reference signals are M channel state information reference signals (channel state information reference signal, CSI-RS).

According to a second aspect, a beam training method is provided. The method may be performed by a first device, and the first device may be an apparatus, for example, a chip system, that can support a function required by the first device to implement the method. The method includes: The first device receives second configuration information used for beam training. The second configuration information is used to configure L spatial domain filter parameters and L codewords that are associated with M reference signals, each of the M reference signals is associated with at least one of the L codewords and at least one of the L spatial domain filter parameters, and M and L are positive integers.

The first device sends second indication information. The second indication information indicates V spatial domain filter parameters in the L spatial domain filter parameters, V is a positive integer less than or equal to L, and the second indication information is determined based on measurement performed by the first device on the M reference signals, the L codewords, and the L spatial domain filter parameters.

Optionally, the L spatial domain filter parameters are in a one-to-one correspondence with the L codewords, and the L spatial domain filter parameters are in a one-to-one correspondence with L beams. In other words, any two of the L spatial domain filter parameters, the L codewords, and the L beams are in a one-to-one correspondence.

Optionally, the M reference signals may be configured by using the second configuration information or configured by using other configuration information different from the second configuration information. This is not limited in this application. In other words, the second configuration information may be used to configure the M reference signals and the L codewords and the L spatial domain filter parameters that are associated with the M reference signals, or the second configuration information may be used to configure only the L codewords and the L spatial domain filter parameters that are associated with the M reference signals, and the M reference signals are configured by using other configuration information.

Optionally, the M reference signals are in a one-to-one correspondence with M beam groups.

In the foregoing solution, the first device receives the second configuration information used for beam training, and may determine, based on the second configuration information, the L spatial domain filter parameters of the L codewords that are associated with the M reference signals. The first device may measure the M reference signals, determine the V spatial domain filter parameters based on a measurement result, and report the second indication information indicating the V spatial domain filter parameters. In this case, a device that receives the second indication information may determine an effective beam based on the V spatial domain filter parameters.

Optionally, the first device may measure some or all of the M reference signals to determine the second indication information.

With reference to the first possible implementation of the second aspect, in a second possible implementation, the second configuration information includes M second fields, and the M second fields are separately used to carry the spatial domain filter parameters and the codewords that are associated with configurations of the M reference signals.

In the foregoing solution, the M second fields included in the first configuration information are separately used to carry the codewords and the spatial domain filter parameters that are associated with the M reference signals. In this way, the codewords and the spatial domain filter parameters that are associated with the M reference signals can be directly carried in the M first fields.

With reference to the first or the second possible implementation of the second aspect, in a third possible implementation, the method further includes: The first device sends fourth indication information to a second device. The fourth indication information indicates at least one of second amplitude information and second energy information that correspond to the V spatial domain filter parameters.

In this case, the device that receives the fourth indication information may determine a gain of the effective beam based on the at least one of the first amplitude information and the first energy information that correspond to the V spatial domain filter parameters.

With reference to any one of the first to the third possible implementations of the second aspect, in a fourth possible implementation, the mth reference signal in the M reference signals has two ports, and the first device measures the mth reference signal based on the following assumptions:

A sent signal of a first port in the two ports is determined based on $\Sigma \mathbf{b}_i \times s_1$, where $i = 1,2,...,R_m$ ; and/or
a sent signal of a second port in the two ports is determined based on $\Sigma t_i \mathbf{b}_i \times s_2$ , where $t_i$ is associated with the ith codeword of the mth reference signal, and $i = 1,2,...,R_m$.
s1 and s2 are complex numbers determined based on reference signal sequences of the two ports, and $\mathbf{b}_i$ is the ith spatial domain filter parameter associated with the mth reference signal.

Optionally, that $t_i$ is associated with the ith codeword of the mth reference signal may mean that $t_i$ is the ith codeword of the mth reference signal or a form of the ith codeword of the mth reference signal is related to $t_i$.

It may be understood that $\mathbf{b}_i$ is a spatial domain filter parameter corresponding to the ith beam associated with the mth reference signal.

Optionally, that the mth reference signal has two ports may mean that the mth reference signal occupies resources of the two ports and signals sent by using a plurality of beams on the two ports jointly constitute one reference signal. In this case, when one beam group includes at least two beams, the first device may measure a plurality of beams based on a measurement result of one reference signal received on the resources of the two ports, so that resource overheads can be reduced.

With reference to any one of the first to the fourth possible implementations of the second aspect, in a fifth possible implementation, the second configuration information includes a quantity of codewords and a quantity $R_m$ of spatial domain filter parameters that are associated with the mth reference signal in the M reference signals, $R_m$ is used to configure $R_m$ codewords associated with the mth reference signal, $R_m$ is a positive integer less than or equal to L, m is a positive integer less than or equal to M, and

$$\sum_{m=1}^{M} R_m = L$$

.

In the foregoing solution, there is a correspondence between a codeword quantity and a codeword, and the first device determines the codeword based on the codeword quantity configured by using the first configuration information.

With reference to the fifth possible implementation of the second aspect, in a sixth possible implementation, that $R_m$ is used to configure $R_m$ codewords associated with the mth reference signal is specifically:

The ith codeword in the $R_m$ codewords is determined based on $t_i = A \times \exp(j \times x_i)$ . $x_i = \alpha + 2\pi(i-1)/R_m$, and $i = 1,2,...,R_m$.

$\alpha$ is a constant in $[0,2\pi]$, A is a complex constant, and $j = \sqrt{-1}$ .

With reference to the fifth possible implementation of the second aspect, in a seventh possible implementation, that $R_m$ is used to configure $R_m$ codewords associated with the mth reference signal is specifically:

$R_m$ and a quantity M of reference signals are used to determine the $R_m$ codewords associated with the mth reference signal.

With reference to the seventh possible implementation of the second aspect, in an eighth possible implementation, that $R_m$ and a quantity M of reference signals are used to determine the $R_m$ codewords associated with the mth reference signal is specifically:

The ith codeword in the $R_m$ codewords associated with the mth reference signal is determined based on $t_i = A \times \exp(j \times x_i + j \times \theta_m)$, $\theta_m$ is a value in $[0,2\pi]$, $\theta_m$ is a value related to m and M, $\alpha$ is a constant in $[0,2\pi]$, A is a complex number, and $j = \sqrt{-1}$ . $x_i = \alpha + 2\pi(i-1)/R_m$, and $i = 1,2,...,R_m$.

With reference to the eighth possible implementation of the second aspect, in a ninth possible implementation, $\theta_m = 2m\pi/Y$, where Y is a prime number greater than or equal to M and maxm $R_m$, and maxm $R_m$ represents a largest value in $R_1,R_2,...,R_M$ ; or if $R_1 = R_2 =...= R_M = R$, $\theta_m = 2m\pi/MR$ , and $m = 1,2,...,M$ .

In some possible implementations, in the foregoing solution, a codeword may be in a row vector form or a column vector form, to be specific, the ith codeword in the $R_m$ codewords is in a form of $B \times [1;t_i]$ or $B \times [1,t_i]$. B is a complex constant.

With reference to any one of the first to the ninth possible implementations of the second aspect, in a tenth possible implementation, that each of the M reference signals is associated with at least one of the L codewords is specifically:

At least one of the M reference signals is associated with at least two of the L codewords.

In the foregoing solution, because the L codewords correspond to the L beams, and one reference signal is associated with at least two codewords, which equivalently means that one reference signal is associated with at least two beams, the first device may measure one reference signal to implement measurement of at least two beams, so that time can be saved, and reference signal overheads can be reduced.

With reference to any one of the first to the tenth possible implementations of the second aspect, in an eleventh possible implementation, at least one of the L codewords that is associated with each of the M reference signals is different from each other. In other words, there are no same codewords in the at least one codeword associated with each reference signal, so that one beam group associated with one reference signal can be distinguished by using different codewords.

With reference to any one of the first to the eleventh possible implementations of the second aspect, in a twelfth possible implementation, the M reference signals are M CSI-RSs.

According to a third aspect, a beam training method is provided. The method may be performed by a second device, and the second device may be an apparatus, for example, a chip system, that can support a function required by the second device to implement the method. The method includes: The second device sends first configuration information used for beam training. The first configuration information is used to configure L codewords associated with M reference signals, each of the M reference signals is associated with at least one of the L codewords, and M and L are positive integers.

The second device receives first indication information. The first indication information indicates V codewords in the L codewords, V is a positive integer less than or equal to L, and the first indication information is determined by a first device based on measurement of the M reference signals and the L codewords.

Further, the L codewords correspond to L beams, and the second device has a correspondence between the L codewords and the L beams. In this case, the second device may determine V effective beams based on the V codewords in the first indication information. The V effective beams are different or some of the beams are the same. The second device may further select, from the V effective beams, a beam for sending a signal.

With reference to the first possible implementation of the third aspect, in a second possible implementation, the first configuration information includes M first fields, and the M first fields are separately used to carry the codewords associated with the M reference signals.

In the foregoing solution, the M first fields included in the first configuration information are separately used to carry the codewords associated with the M reference signals. In this way, the codewords associated with the M reference signals can be directly carried in the M first fields.

Optionally, if reference signals are associated with a same codeword, the first configuration information includes a field, and the field carries the codeword associated with the reference signals.

With reference to the first or the second possible implementation of the third aspect, in a third possible implementation, that the first indication information indicates V codewords in the L codewords is specifically:

The first indication information includes indexes of the V codewords, and an index of the ith codeword associated with the mth reference signal in the M reference signals is $\sum_{n=1}^{m-1} R_n + (i-1)$ or $\sum_{n=1}^{m-1} R_n + i$, where $i = 1,2,...,R_m$.

$R_m$ is a quantity of codewords associated with the mth reference signal, and $m = 1,2,..., M$.

With reference to any one of the first to the third possible implementations of the third aspect, in a fourth possible implementation, that the first indication information indicates V codewords in the L codewords is specifically:

The first indication information indicates indexes of W reference signals and indexes of codewords associated with all of the W reference signals. The wth reference signal in the W reference signals is associated with indexes of $v_w$ codewords, the W reference signals are reference signals in the M reference signals, $v_w$ is a positive integer, and $\sum_{w=1}^{W} v_w = V$.

With reference to any one of the first to the fourth possible implementations of the third aspect, in a fifth possible implementation, the method further includes: The second device receives third indication information. The third indication information indicates at least one of first amplitude information and first energy information that correspond to the V codewords.

With reference to any one of the first to the fifth possible implementations of the third aspect, in a sixth possible implementation, the mth reference signal in the M reference signals has two ports, and the second device sends the mth reference signal based on the following criteria:

A sent signal of a first port in the two ports is determined based on s1; and/or
a sent signal of a second port in the two ports is determined based on $\mathbf{t_i} \times \mathbf{s_2}$, where $\mathbf{t_i}$ is associated with the ith codeword of the mth reference signal, and $i = 1,2,...,R_m$. s1 and s2 are complex numbers determined based on reference signal sequences of the two ports.

With reference to any one of the first to the sixth possible implementations of the third aspect, in a seventh possible implementation, the first configuration information includes a quantity $R_m$ of codewords associated with the mth reference signal in the M reference signals, $R_m$ is used to configure $R_m$ codewords associated with the mth reference signal, $R_m$ is a positive integer less than or equal to L, m is a positive integer less than or equal to M, and $\sum_{m=1}^{M} R_m = L$.

With reference to the seventh possible implementation of the third aspect, in an eighth possible implementation, that $R_m$ is used to configure $R_m$ codewords associated with the mth reference signal is specifically: The ith codeword in the $R_m$ codewords is determined based on $t_i = A \times \exp(j \times x_i)$. $x_i = \alpha + 2\pi(i-1)/R_m$, and $i = 1,2,...,R_m$. $\alpha$ is a constant in $[0,2\pi]$, A is a complex constant, and $j = \sqrt{-1}$.

With reference to the seventh possible implementation of the third aspect, in a ninth possible implementation, that $R_m$ is used to configure $R_m$ codewords associated with the mth reference signal is specifically:

$R_m$ and a quantity M of reference signals are used to determine the $R_m$ codewords associated with the mth reference signal.

With reference to the ninth possible implementation of the third aspect, in a tenth possible implementation, that $R_m$ and a quantity M of reference signals are used to determine the $R_m$ codewords associated with the mth reference signal is specifically:

The ith codeword in the $R_m$ codewords associated with the mth reference signal is determined based on $t_i = A \times \exp(j \times x_i + j \times \theta_m)$, $\theta_m$ is a value in $[0,2\pi]$, $\theta_m$ is a value related to m and M, $\alpha$ is a constant in $[0,2\pi]$, A is a complex number, and $j = \sqrt{-1}$. $x_i = \alpha + 2\pi(i-1)/R_m$, and $i = 1,2,...,R_m$.

With reference to the tenth possible implementation of the third aspect, in an eleventh possible implementation, $\theta_m = 2m\pi/Y$, where $Y$ is a prime number greater than or equal to M and maxm $R_m$, and maxm $R_m$ represents a largest value in $R_1,R_2,..., R_M$; or

if $R_1 = R_2 =...= R_M = R$, $\theta_m = 2m\pi/MR$, and $m = 1,2,...,M$.

Optionally, in the foregoing solution, a codeword may be in a row vector form or a column vector form, to be specific, the ith codeword in the $R_m$ codewords is in a form of $B \times [1;t_i]$ or $B \times [1,t_i]$. B is a complex constant.

With reference to any one of the first to the eleventh possible implementations of the third aspect, in a twelfth possible implementation, that each of the M reference signals is associated with at least one of the L codewords is specifically:

At least one of the M reference signals is associated with at least two of the L codewords.

In the foregoing solution, because the L codewords correspond to the L beams, and one reference signal is associated with at least two codewords, which equivalently means that one reference signal is associated with at least two beams, the first device may measure one reference signal to implement measurement of at least two beams, so that time can be saved, and reference signal overheads can be reduced.

With reference to any one of the first to the twelfth possible implementations of the third aspect, in a thirteenth possible implementation, at least one of the L codewords that is associated with each of the M reference signals is different from each other. In other words, there are no same codewords in the at least one codeword associated with each reference signal, so that one beam group associated with one reference signal can be distinguished by using different codewords.

With reference to any one of the first to the thirteenth possible implementations of the third aspect, in a fourteenth possible implementation, the M reference signals are M CSI-RSs.

According to a fourth aspect, a beam training method is provided. The method may be performed by a second device, and the second device may be an apparatus, for example, a chip system, that can support a function required by the second device to implement the method. The method includes:

The second device sends second configuration information used for beam training. The second configuration information is used to configure L spatial domain filter parameters and L codewords that are associated with M reference signals, each of the M reference signals is associated with at least one of the L codewords and at least one of the L spatial domain filter parameters, and M and L are positive integers.

The second device receives second indication information. The second indication information indicates V spatial domain filter parameters in the L spatial domain filter parameters, and V is a positive integer less than or equal to L.

With reference to the first possible implementation of the fourth aspect, in a second possible implementation, the second configuration information includes M second fields, and the M second fields are separately used to carry the spatial domain filter parameters and the codewords that are associated with configurations of the M reference signals.

With reference to the first or the second possible implementation of the fourth aspect, in a third possible implementation, the method further includes: The second device receives fourth indication information. The fourth indication information indicates at least one of second amplitude information and second energy information that correspond to the V spatial domain filter parameters.

With reference to any one of the first to the third possible implementations of the fourth aspect, in a fourth possible implementation, the mth reference signal in the M reference signals has two ports, and the second device sends the mth reference signal based on the following criteria:

A sent signal of a first port in the two ports is determined based on $\Sigma \mathbf{b_i} \times s_1$, where $i$ = 1, 2, ... ,$R_m$ ; and/or a sent signal of a second port in the two ports is determined based on $\Sigma t_i \mathbf{b_i} \times s_2$ , where $\mathbf{t_i}$ is associated with the ith codeword of the mth reference signal, and $i$ = 1, 2, ... ,$R_m$. s1 and s2 are complex numbers determined based on reference signal sequences of the two ports, and $\mathbf{b_i}$ is the ith spatial domain filter parameter associated with the mth reference signal.

With reference to any one of the first to the fourth possible implementations of the fourth aspect, in a fifth possible implementation, the second configuration information includes a quantity $R_m$ of codewords and a quantity $R_m$ of spatial domain filter parameters that are associated with the mth reference signal in the M reference signals, $R_m$ is used to configure $R_m$ codewords associated with the mth reference signal, $R_m$ is a positive integer less than or equal to L, m is a positive integer less than or equal to M, and

$$\sum_{m=1}^{M} R_m = L$$

With reference to the fifth possible implementation of the fourth aspect, in a sixth possible implementation, that $R_m$ is used to configure $R_m$ codewords associated with the mth reference signal is specifically:

The ith codeword in the $R_m$ codewords is determined based on $t_i = A \times \exp(j \times x_i)$ . $x_i = \alpha + 2\pi(i-1)/R_m$, and $i$ =1,2,...,$R_m$. $\alpha$ is a constant in [0,2$\pi$], A is a complex constant, and

$$j = \sqrt{-1}$$

.

With reference to the fifth possible implementation of the fourth aspect, in a seventh possible implementation, that $R_m$ is used to configure $R_m$ codewords associated with the mth reference signal is specifically:

$R_m$ and a quantity M of reference signals are used to determine the $R_m$ codewords associated with the mth reference signal.

With reference to the seventh possible implementation of the fourth aspect, in an eighth possible implementation,

that $R_m$ and a quantity M of reference signals are used to determine the $R_m$ codewords associated with the mth reference signal is specifically:

The ith codeword in the $R_m$ codewords associated with the mth reference signal is determined based on $t_i = A \times \exp(j \times x_i + j \times \theta_m)$, $\theta_m$ is a value in $[0,2\pi]$, $\theta_m$ is a value related to m and M, $\alpha$ is a constant in $[0,2\pi]$, A is a complex number, and $j = \sqrt{-1}$ . $x_i = \alpha + 2\pi(i\text{-}1)/R_m$, and $i = 1,2,..., R_m$.

With reference to the eighth possible implementation of the fourth aspect, in a ninth possible implementation, $\theta_m = 2m\pi/Y$, where $Y$ is a prime number greater than or equal to M and maxm $R_m$, and maxm $R_m$ represents a largest value in $R_1,R_2,...,R_M$ ; or if $R_1 = R_2 =...= R_M = R$, $\theta_m = 2m\pi/MR$, and $m = 1,2,...,M$ .

In some possible implementations, in the foregoing solution, a codeword may be in a row vector form or a column vector form, to be specific, the ith codeword in the $R_m$ codewords is in a form of $B \times [1;t_i]$ or $B \times [1,t_i]$. B is a complex constant.

With reference to any one of the first to the ninth possible implementations of the fourth aspect, in a tenth possible implementation, that each of the M reference signals is associated with at least one of the L codewords is specifically:

At least one of the M reference signals is associated with at least two of the L codewords.

In the foregoing solution, because the L codewords correspond to L beams, and one reference signal is associated with at least two codewords, which equivalently means that one reference signal is associated with at least two beams, a first device may measure one reference signal to implement measurement of at least two beams, so that time can be saved, and reference signal overheads can be reduced.

With reference to any one of the first to the tenth possible implementations of the fourth aspect, in an eleventh possible implementation, at least one of the L codewords that is associated with each of the M reference signals is different from each other. In other words, there are no same codewords in the at least one codeword associated with each reference signal, so that one beam group associated with one reference signal can be distinguished by using different codewords.

With reference to any one of the first to the eleventh possible implementations of the fourth aspect, in a twelfth possible implementation, the M reference signals are M CSI-RSs.

According to a fifth aspect, this application provides a beam training apparatus. The apparatus is included in an electronic device, and the apparatus has a function of implementing actions of the first device in the first aspect and the possible implementations of the first aspect. The function may be implemented by using hardware, or may be implemented by using hardware executing corresponding software. The hardware or the software includes one or more modules or units corresponding to the foregoing function. For example, the apparatus may include a sending unit, a receiving unit, and the like.

According to a sixth aspect, this application provides a beam training apparatus. The apparatus is included in an electronic device, and the apparatus has a function of implementing actions of the first device in the second aspect and the possible implementations of the second aspect. The function may be implemented by using hardware, or may be implemented by using hardware executing corresponding software. The hardware or the software includes one or more modules or units corresponding to the foregoing function. For example, the apparatus may include a sending unit, a receiving unit, and the like.

According to a seventh aspect, this application provides a beam training apparatus. The apparatus is included in an electronic device, and the apparatus has a function of implementing actions of the second device in the third aspect and the possible implementations of the third aspect. The function may be implemented by using hardware, or may be implemented by using hardware executing corresponding software. The hardware or the software includes one or more modules or units corresponding to the foregoing function. For example, the apparatus may include a sending unit, a receiving unit, and the like.

According to an eighth aspect, this application provides a beam training apparatus. The apparatus is included in an electronic device, and the apparatus has a function of implementing actions of the second device in the fourth aspect and the possible implementations of the fourth aspect. The function may be implemented by using hardware, or may be implemented by using hardware executing corresponding software. The hardware or the software includes one or more modules or units corresponding to the foregoing function. For example, the apparatus may include a sending unit, a receiving unit, and the like.

According to a ninth aspect, a beam training apparatus is provided. The apparatus includes a processor, the processor is coupled to a memory, the memory is configured to store a computer program or instructions, and the processor is configured to execute the computer program or the instructions stored in the memory, so that the method in the first aspect is performed.

For example, the processor is configured to execute the computer program or the instructions stored in the memory, so that the apparatus performs the method in the first aspect.

Optionally, the apparatus includes one or more processors.

Optionally, the apparatus may further include the memory coupled to the processor.

Optionally, the apparatus may include one or more memories.

Optionally, the memory and the processor may be integrated together or separately disposed.

Optionally, the apparatus may further include a transceiver.

According to a tenth aspect, a beam training apparatus is provided. The apparatus includes a processor, the processor is coupled to a memory, the memory is configured to store a computer program or instructions, and the processor is configured to execute the computer program or the instructions stored in the memory, so that the method in the second aspect is performed.

For example, the processor is configured to execute the computer program or the instructions stored in the memory, so that the apparatus performs the method in the second aspect.

Optionally, the apparatus includes one or more processors.

Optionally, the apparatus may further include the memory coupled to the processor.

Optionally, the apparatus may include one or more memories.

Optionally, the memory and the processor may be integrated together or separately disposed.

Optionally, the apparatus may further include a transceiver.

According to an eleventh aspect, a beam training apparatus is provided. The apparatus includes a processor, the processor is coupled to a memory, the memory is configured to store a computer program or instructions, and the processor is configured to execute the computer program or the instructions stored in the memory, so that the method in the third aspect is performed.

For example, the processor is configured to execute the computer program or the instructions stored in the memory, so that the apparatus performs the method in the third aspect.

Optionally, the apparatus includes one or more processors.

Optionally, the apparatus may further include the memory coupled to the processor.

Optionally, the apparatus may include one or more memories.

Optionally, the memory and the processor may be integrated together or separately disposed.

Optionally, the apparatus may further include a transceiver.

According to a twelfth aspect, a beam training apparatus is provided. The apparatus includes a processor, the processor is coupled to a memory, the memory is configured to store a computer program or instructions, and the processor is configured to execute the computer program or the instructions stored in the memory, so that the method in the fourth aspect is performed.

For example, the processor is configured to execute the computer program or the instructions stored in the memory, so that the apparatus performs the method in the fourth aspect.

Optionally, the apparatus includes one or more processors.

Optionally, the apparatus may further include the memory coupled to the processor.

Optionally, the apparatus may include one or more memories.

Optionally, the memory and the processor may be integrated together or separately disposed.

Optionally, the apparatus may further include a transceiver.

According to a thirteenth aspect, a beam training system is provided. The system includes the apparatuses in the fifth aspect and the seventh aspect, or includes the apparatuses in the sixth aspect and the eighth aspect, or includes the apparatuses in the ninth aspect and the eleventh aspect, or includes the apparatuses included in the tenth aspect and the twelfth aspect.

According to a fourteenth aspect, a computer-readable storage medium is provided. A computer program (also referred to as instructions or code) used to implement the first aspect or the method in the first aspect is stored on the computer-readable storage medium.

For example, when the computer program is executed by a computer, the computer can perform the method in the first aspect.

According to a fifteenth aspect, a computer-readable storage medium is provided. A computer program (also referred to as instructions or code) used to implement the second aspect or the method in the second aspect is stored on the computer-readable storage medium.

For example, when the computer program is executed by a computer, the computer can perform the method in the second aspect.

According to a sixteenth aspect, a computer-readable storage medium is provided. A computer program (also referred to as instructions or code) used to implement the third aspect or the method in the third aspect is stored on the computer-readable storage medium.

For example, when the computer program is executed by a computer, the computer can perform the method in the third aspect.

According to a seventeenth aspect, a computer-readable storage medium is provided. A computer program (also referred to as instructions or code) used to implement the fourth aspect or the method in the fourth aspect is stored on the computer-readable storage medium.

For example, when the computer program is executed by a computer, the computer can perform the method in the fourth aspect.

According to an eighteenth aspect, this application provides a chip, including a processor. The processor is configured to read and execute a computer program stored in a memory, to perform the method in any one of the first aspect and the possible implementations of the first aspect.

Optionally, the chip further includes the memory, and the memory and the processor are connected by using a circuit or a wire.

Further optionally, the chip further includes a communications interface.

According to a nineteenth aspect, this application provides a chip, including a processor. The processor is configured to read and execute a computer program stored in a memory, to perform the method in any one of the second aspect and the possible implementations of the second aspect.

Optionally, the chip further includes the memory, and the memory and the processor are connected by using a circuit or a wire.

Further optionally, the chip further includes a communications interface.

According to a twentieth aspect, this application provides a chip, including a processor. The processor is configured to read and execute a computer program stored in a memory, to perform the method in any one of the third aspect and the possible implementations of the third aspect.

Optionally, the chip further includes the memory, and the memory and the processor are connected by using a circuit or a wire.

Further optionally, the chip further includes a communications interface.

According to a twenty-first aspect, this application provides a chip, including a processor. The processor is configured to read and execute a computer program stored in a memory, to perform the method in any one of the fourth aspect and the possible implementations of the fourth aspect.

Optionally, the chip further includes the memory, and the memory and the processor are connected by using a circuit or a wire.

Further optionally, the chip further includes a communications interface.

According to a twenty-second aspect, this application provides a computer program product. The computer program product includes a computer program (also referred to as instructions or code), and when the computer program is executed by a computer, the computer implements the methods in the aspects.

## BRIEF DESCRIPTION OF DRAWINGS

FIG. 1 is a schematic diagram of a communications system according to an embodiment of this application;
FIG. 2 is a schematic diagram of a beam training method according to an embodiment of this application;
FIG. 3 is a schematic diagram of 2-port resources according to an embodiment of this application;
FIG. 4 is a schematic diagram of a reference signal resource according to an embodiment of this application;
FIG. 5 is a schematic diagram of another reference signal resource according to an embodiment of this application;
FIG. 6 is a schematic diagram of another beam training method according to an embodiment of this application;
FIG. 7 is a schematic diagram of still another reference signal resource according to an embodiment of this application;
FIG. 8 is a schematic diagram of still another reference signal resource according to an embodiment of this application;
FIG. 9 is a schematic diagram of still another beam training method according to an embodiment of this application;
FIG. 10 is a schematic diagram of still another reference signal resource according to an embodiment of this application;
FIG. 11 is a schematic block diagram of a beam training apparatus according to an embodiment of this application; and
FIG. 12 is a schematic block diagram of another beam training apparatus according to an embodiment of this application.

## DESCRIPTION OF EMBODIMENTS

The following describes technical solutions in embodiments of this application with reference to the accompanying drawings in embodiments of this application.

It should be understood that division of manners, cases, types, and embodiments in embodiments of this application is merely for ease of description, and should not constitute a special limitation, and various manners, types, cases, and features in the embodiments may be combined when no contradiction occurs.

It should be further understood that "first", "second", and "third" in embodiments of this application are merely used for distinguishing, and should not constitute any limitation on this application. It should be further understood that sequence numbers of the processes do not mean an execution sequence in embodiments of this application. The execution sequence of the processes should be determined based on functions and internal logic of the processes, and should not constitute any limitation on implementation processes of embodiments of this application.

Embodiments of this application may be applied to various communications systems such as a long term evolution (long term evolution, LTE) system, a 5th generation (the 5th Generation, 5G) system, a machine to machine (machine to machine, M2M) system, a sidelink (Sidelink) communications system, or another evolved future communications system such as a 6G system. A wireless air interface technology of 5G is referred to as new radio (new radio, NR), and the 5G system may also be referred to as an NR system.

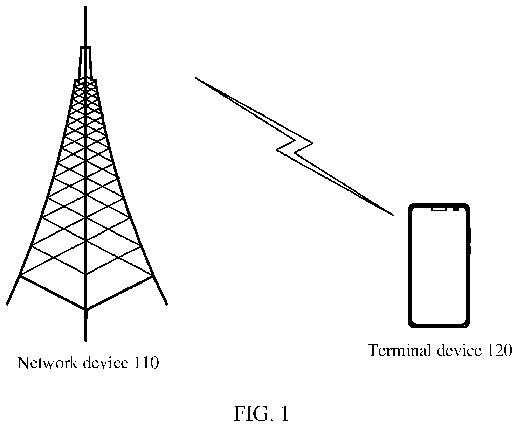

An application scenario of this application is first described. FIG. 1 is a schematic diagram of a communications system applicable to this application.

FIG. 1 is a schematic diagram of an inter-device communications system 100. The wireless communications device may include one or more network devices, for example, a network device 110 in FIG. 1. A terminal device 120 may communicate with the network device 110. For example, in FIG. 1, the network device 110 communicates with the terminal device 120. A link used by the terminal device 120 to send data to the network device 110 is referred to as an uplink (uplink), and a link used by the terminal device 120 to receive data sent by the network device 110 is referred to as a downlink (downlink).

Optionally, the wireless communications system 100 may further include another terminal device, and communication may be directly performed between the another terminal device and the terminal device 120. Communication between terminal devices may be referred to as vehicle to everything (vehicle to everything, V2X) communication, device to device (device to device, D2D) communication, or the like. V2X communication may be considered as a special case of D2D communication.

A new radio (new radio, NR) access technology is a current mainstream wireless communications technology. For a V2X service feature and a new service requirement, the new radio access technology can support V2X communication with a lower delay and higher reliability. V2X is a basis and a key technology for implementing smart cars, self driving, and an intelligent transportation system. V2X may include vehicle to network (vehicle to network, V2N), vehicle to vehicle (vehicle to-vehicle, V2V), vehicle to infrastructure (vehicle to infrastructure, V2I), vehicle to pedestrian (vehicle to pedestrian, V2P), and the like. V2N communication is the most widely used form of the Internet of vehicles. Main functions of V2N communication are to connect a vehicle to a cloud server by using a mobile network and use application functions such as navigation, entertainment, and anti-theft that are provided by the cloud server. V2V communication may be used for inter-vehicle information exchange and prompt, and is most typically applied to an inter-vehicle anti-collision security system. A vehicle may communicate with a road or even another infrastructure such as a traffic light or a roadblock through V2I communication, to obtain road management information such as a signal time sequence of the traffic light. V2P communication may be used to give a safety warning to a pedestrian or a non-motor vehicle on a road.

The terminal device 120 may be located at a fixed position, or may be removable. FIG. 1 is only a schematic diagram, and the communications system may further include another network device, for example, may further include a wireless relay device and a wireless backhaul device, which are not shown in FIG. 1. Types and a quantity of network devices and terminal devices included in the mobile communications system are not limited in this embodiment of this application.

In the mobile communications system 100, the terminal device 120 wirelessly accesses the network device in the mobile communications system. The network device 110 may be a base station, an evolved NodeB (evolved node B, eNB), a home NodeB, an access point (access point, AP) in a wireless fidelity (wireless fidelity, WIFI) system, a wireless relay node, a wireless backhaul node, a transmission point (transmission point, TP), a transmission and reception point (transmission and reception point, TRP), or the like, or may be a gNB in an NR system, or may be a component or some devices, for example, a central unit (central unit, CU), a distributed unit (distributed unit, DU), or a baseband unit (baseband unit, BBU), that constitute a base station.

The terminal device 120 in the mobile communications system 100 may also be referred to as a terminal, user equipment (user equipment, UE), a mobile station (mobile station, MS), a mobile terminal (mobile terminal, MT), and the like. The terminal device in this embodiment of this application may be a mobile phone (mobile phone), a tablet computer (Pad), a computer with a wireless receiving/transmission function, or may be a wireless terminal applied to scenarios such as virtual reality (virtual reality, VR), augmented reality (augmented reality, AR), industrial control (industrial control), self driving (self driving), telemedicine (remote medical), a smart grid (smart grid), transportation safety (transportation safety), a smart city (smart city), and a smart home (smart home). In this application, the foregoing terminal device and a chip that can be applied to the foregoing terminal device are collectively referred to as a terminal device. It should be understood that a specific technology and a specific device form used by the terminal device are not limited in this embodiment of this application.

It should be understood that for ease of understanding only, the terminal device 120 and the network device 110 are schematically shown in FIG. 1. However, this should not constitute any limitation on this application. The wireless communications system may include more network devices or may include more or fewer terminal devices. This is not limited in this application.

In embodiments of this application, a first device may be the terminal device 120, and a second device may be the network device 110; or a first device may be the terminal device 120, and a second device may be another terminal device.

The following describes in detail terms involved in this application.

1. Beam (beam)

In an NR protocol, a beam may be embodied as a spatial domain filter parameter (spatial domain filter parameter), which may be referred to as a spatial filter (spatial filter) or a spatial parameter (spatial parameter). A beam used to send a signal may be referred to as a transmission beam (transmission beam, Tx beam), and may be referred to as a spatial domain transmission filter parameter (spatial domain transmission filter parameter) or a spatial transmission parameter (spatial transmission parameter). A beam used to receive a signal may be referred to as a reception beam (reception beam, Rx beam), and may be referred to as a spatial domain receive filter parameter (spatial domain receive filter parameter) or a spatial reception parameter (spatial RX parameter).

The beam may be a direction in which signal energy is concentrated in space after a signal is transmitted through an antenna, and the reception beam may be a direction in which a radio signal received from the antenna is concentrated in space.

The beam may be a wide beam, a narrow beam, or a beam of another type. A technology for forming a beam may be a beamforming technology or another technology. The beamforming technology may be specifically a digital beamforming technology, an analog beamforming technology, a hybrid digital/analog beamforming technology, or the like. In other words, one specific beam corresponds to one specific spatial domain filter parameter or beamforming parameter (for example, beamforming vector/parameter), and in the following descriptions, it may be considered that any two of beams, spatial domain filter parameters, and beamforming parameters are in a one-to-one correspondence.

In beam measurement, different reference signals usually correspond to different beams, in other words, a transmit end sends different reference signals on different resources by using different beams. Therefore, a reference signal resource index may be used to identify a beam corresponding to a reference signal resource. Different transmission beams are determined based on different spatial domain filter parameters.

2. Reference signal resource

In beam measurement, a transmit end may send reference signals on different reference signal resources, different reference signals are beamformed by using different spatial domain filter parameters, and a receive end measures different reference signals on different reference signal resources to determine beam quality. The reference signal includes but is not limited to a sounding reference signal (sounding reference signal, SRS), a CSI-RS, a cell specific reference signal (cell specific reference signal, CS-RS), a UE specific reference signal (user equipment specific reference signal, US-RS), and a synchronization signal/physical broadcast channel block (synchronization signal/physical broadcast channel block, SS/PBCH block). The SS/PBCH block may be referred to as a synchronization signal block (synchronization signal block, SSB).

3. Reference signal port

One reference signal may have one or more ports. Different ports may occupy different time-frequency resources and/or different code domain resources.

To improve a throughput of an NR system, a millimeter-wave band needs to be used to obtain a larger bandwidth resource. However, channel attenuation of the millimeter-wave band is quite large, and a network device and a terminal device need to use a multi-antenna beamforming technology to transmit beams in a specific direction, to improve a gain of a transmission channel and ensure signal coverage. In addition, the beamforming technology is analog beamforming, to be specific, a reference signal is beamformed by using a phase shifter. On entire communications bandwidth, one phase shifter can obtain only one value at one moment. Therefore, different beams need to be switched by using a plurality of different moments in the analog beamforming technology. To find a suitable beam direction from a large quantity of possible beams, a beam training process is introduced in the 3GPP NR Release 15/16 standard. Downlink beam training is used as an example. The process is as follows: The network device sends a plurality of reference signals on a plurality of time units (for example, orthogonal frequency division multiplexing (Orthogonal Frequency Division Multiplexing, OFDM) symbols or slots), and different reference signals are beamformed by using different beams. The terminal device measures different reference signals, determines quality of beams corresponding to the different reference signals, and reports a resource index of a reference signal with better beam quality. The resource index of the reference signal with better beam quality is used to assist the network device in determining a beam that can achieve relatively good signal quality when being used for subsequent communication. In embodiments of this application, for ease of description, the beam with relatively good signal quality is referred to as an effective beam. In the 3GPP NR Release 15/16 standard, for downlink beam training, the terminal device measures reference signal received power (reference signal receiving power, RSRP), and reports resource indexes of some reference signals with relatively large RSRP. However, on the millimeter-wave band, to ensure a beamforming gain, a network area covered by each beam is relatively small, in other words, a narrow beam is usually used. In addition, the network device and/or the terminal device usually need or needs to scan many beam directions. Therefore, beam training requires many time units, it takes a long time to perform beam training, and fast beam training cannot be completed. For example, if 128 beams exist, 128 time units need to be occupied.

Embodiments of this application provide a fast beam training method, to reduce a delay of beam training and reduce reference signal overheads caused by beam training.

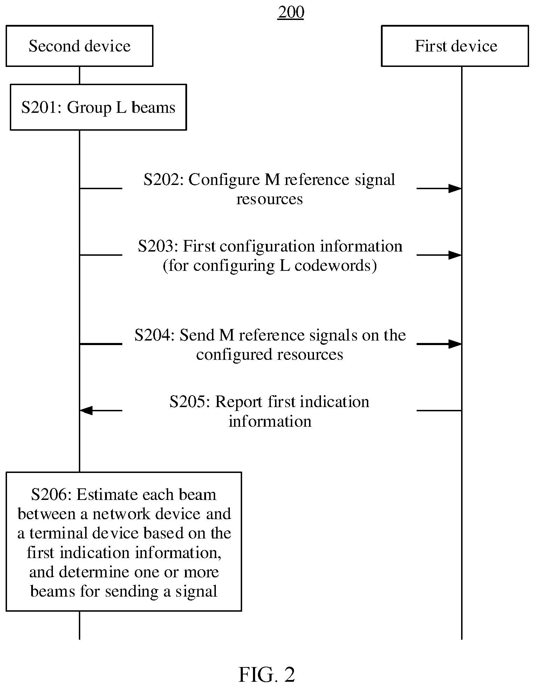

With reference to the accompanying drawings, the following describes a beam training method 200 provided in an embodiment of this application. The method 200 shown in FIG. 2 includes but is not limited to the following steps.

S201: A second device groups L beams to obtain M beam groups obtained through grouping. L and M are positive integers.

For example, the second device may evenly or unevenly group the L beams to obtain the beam groups obtained through grouping. One time of grouping corresponds to one grouping manner of a plurality of beams.

Each of the L beams corresponds to one spatial domain filter parameter such as a beamforming vector, used to determine an implementation in which the second device sends a signal on the beam. Therefore, in the following descriptions, it may be considered that spatial domain filter parameters and beams are in a one-to-one correspondence.

It should be noted that S201 is an optional step, and S201 may not exist. To be specific, a plurality of beams do not need to be grouped each time, in other words, the beams are grouped in a default manner.

Optionally, a quantity of beams included in each beam group obtained through grouping is greater than 2. S202: The second device configures M reference signal resources for a first device.

In S202, that the second device configures M reference signal resources for a first device is specifically configuring time-frequency resource locations of the M reference signal resources, M reference signal resource indexes, a quantity of ports corresponding to each of the M reference signal resources, and the like.

It may be understood that the reference signal resource index may also be referred to as an index of a reference signal.

Optionally, the second device is a network device, and the first device is a terminal device.

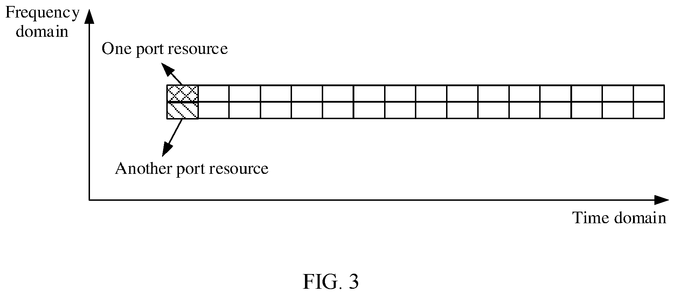

Optionally, each of the M reference signal resources has two ports, as shown in FIG. 3. The M reference signal resources correspond to M 2-port reference signals. One reference signal resource and a reference signal corresponding to the reference signal resource may be identified by one reference signal resource index. Each of the M reference signals is associated with one beam group in S201. In other words, any two of reference signals, reference signal resources, reference signal resource indexes, and beam groups are in a one-to-one correspondence. In the following descriptions, the reference signal resource index may also be referred to as an index of a reference signal. For example, the second device determines, based on each beam group corresponding to each reference signal, a spatial domain filter parameter, for example, a beamforming parameter, of each reference signal when sending the reference signal, so that the first device can obtain measurement results of different beams by measuring different reference signals.

Optionally, a quantity of beams corresponding to each of the M reference signals is greater than 2. In other words, the second device may scan a plurality of beams by using one reference signal resource. Compared with the existing 3GPP NR Release 15/16 standard, in this embodiment of this application, time required for beam scanning and reference signal overheads can be reduced.

Optionally, in S202, the second device may configure periodic, semi-static, or aperiodic reference signal resources for a plurality of times of beam grouping in S201.

Optionally, the second device may configure the M reference signal resources for the first device in a broadcast, multicast, or unicast manner.

S203: The second device sends first configuration information used for beam training to the first device. The first configuration information is used to configure L codewords.

There is an association relationship between the L codewords and the M reference signals. Each of the M reference signals is associated with at least one of the L codewords.

Optionally, at least one of the M reference signals is associated with at least two of the L codewords. For example, when codewords associated with two reference signals are unequal, one reference signal is associated with two of the L codewords, and the other reference signal is associated with one of the L codewords. For another example, when codewords associated with the reference signals are equal, each reference signal is associated with two or more of the L codewords.

Optionally, the mth reference signal in the M reference signals is associated with $R_m$ codewords in the L codewords, and $R_m$ is a positive integer less than or equal to L.

Optionally, the L codewords configured by the second device by using the first configuration information correspond to the L beams in S201, or the L codewords are in a one-to-one correspondence with L spatial domain filter parameters. Therefore, the mth reference signal is further associated with $R_m$ spatial domain filter parameters (beams) in the L spatial domain filter parameters, and one codeword associated with the mth reference signal is associated with one beam in one beam group associated with the mth reference signal. The first device receives the first configuration information used to configure the codewords, and may indicate an effective beam by reporting first indication information indicating a codeword.

There may be the following three cases for a method for configuring the L codewords and the association relationship between the L codewords and the M reference signals.

Case 1: The first configuration information explicitly indicates a codeword associated with each of the M reference signals. To be specific, the first configuration information includes M first fields, and the M first fields are separately used to carry the codewords associated with the M reference signals. Optionally, for a method for explicitly indicating, in the first configuration information, a codeword associated with the mth reference signal, refer to a predefined first rule in Case 2 and/or a predefined second rule in Case 3.

Case 2: The first configuration information is used to configure a quantity $R_m$ of codewords associated with the mth reference signal in the M reference signals, $R_m$ is used to determine, according to the predefined first rule, $R_m$ codewords associated with the mth reference signal, $R_m$ is a positive integer less than or equal to L, m is a positive integer less than or equal to M, and $\sum_{m=1}^{M} R_m = L$ .

Optionally, if each of the M reference signals is associated with a same quantity of codewords, the quantity R of codewords associated with each reference signal may be indicated by using a uniform field. In this case, $R_1 = R_2 =...= R_M = R$.

Optionally, the predefined first rule is that the ith codeword in the $R_m$ codewords is determined based on $t_i = A \times \exp(j \times x_i)$. $x_i = \alpha + 2\pi(i-1)/R_m$, and i = 1,2,...,$R_m$. $\alpha$ is a constant in [0,2$\pi$], A is a complex constant, for example, A=1, and $j = \sqrt{-1}$ .

In Case 2, codewords associated with the reference signals may be the same or different. For example, if the first configuration information indicates that quantities of codewords associated with the first reference signal and the second reference signal meet R1=R2=4 and a quantity R3 of codewords associated with the third reference signal is equal to 5, codewords associated with each of the first reference signal and the second reference signal are { exp($j \times 0$), exp($j \times \pi/2$), exp($j \times \pi$), exp($j \times 3\pi/2$) }, and codewords associated with the third reference signal are { exp($j \times 0$), exp($j \times 2\pi/5$), exp($j \times 4\pi/5$), exp($j \times 6\pi/5$), exp($j \times 8\pi/5$)}.

Case 3: The first configuration information is used to configure a quantity $R_m$ of codewords associated with the mth reference signal in the M reference signals, $R_m$ and a quantity M of reference signals are used to determine, according to the predefined second rule, $R_m$ codewords associated with the mth reference signal, $R_m$ is a positive integer less than or equal to L, m is a positive integer less than or equal to M, and $\sum_{m=1}^{M} R_m = L$ . The predefined second rule makes any two of the L codewords different.

Optionally, the second rule is that the ith codeword in the $R_m$ codewords associated with the mth reference signal is determined based on $t_i = A \times \exp(j \times x_i + j \times \theta_m)$, $\theta_m$ is a value in [0,2$\pi$], $\theta_m$ is a value related to m and M, $\alpha$ is a constant in [0,2$\pi$], A is a complex constant, for example, A=1, and $j = \sqrt{-1}$ . $x_i = \alpha + 2\pi(i-1)/R_m$, and i = 1,2,...,$R_m$. In this case, codewords associated with the reference signals are different.

Optionally, $\theta_m = 2m\pi/Y$ or $\theta_m = 2(m-1)\pi/Y$. Y is a prime number greater than M and maxm $R_m$. maxm $R_m$ represents a largest value in $R_1, R_2,...,R_M$.

Optionally, when $R_1 = R_2 =...= R_M = R$, $\theta_m = 2m\pi/MR$ .

Optionally, an index of the ith codeword associated with the mth reference signal in the M reference signals is $\sum_{n=1}^{m-1} R_n + (i-1)$ or $\sum_{n=1}^{m-1} R_n + i$ , where i = 1,2,...,$R_m$. For example, if the first configuration information indicates that quantities of codewords associated with the first reference signal and the second reference signal meet R1=R2=4, a quantity R3 of codewords associated with the third reference signal is equal to 5, and the total quantity M of reference signals is equal to 3, Y=7, codewords associated with the first reference signal are { exp($j \times 2\pi/7$), exp($j \times 11\pi/14$),

exp($j\times9\pi$/7), exp($j\times25\pi$/14)}, codewords associated with the second reference signal are {exp($j\times4\pi$/7), exp($j\times15\pi$/14), exp($j\times11\pi$/7), exp($j\times29\pi$/14)}, and codewords associated with the third reference signal are { exp($j\times6\pi$/7), exp($j\times44\pi$/35), exp($j\times58\pi$/35), exp($j\times72\pi$/35), exp($j\times86\pi$/35)}. A total of L=13 codewords are configured, and indexes of the codewords are 0 to 12 or 1 to 13.

Optionally, in Case 2 and Case 3, each codeword may be in a column vector form $B \times [1;t_i]$ or a row vector form $B\times[1,t_i]$. B is a constant, for example, $B = 1/\sqrt{2}$. For example, in Case 2, the codeword exp($j \times \pi$/2) corresponds to a column vector form $B\times[1;exp(j\times\pi/2)]$ or a row vector form $B\times[1,exp(j\times\pi/2)]$, and in this case, A=1. For another example, in Case 3, the codeword exp($j\times2\pi$/7) corresponds to a column vector form $B\times[1;exp(j\times2\pi/7)]$ or a row vector form $B\times[1,exp(j\times2\pi/7)]$, and in this case, A=1.

In actual application, codewords may be configured for some beam groups based on Case 1 and/or Case 2, and codewords may be configured for remaining beam groups based on Case 3.

For codeword configuration methods in different cases, the second device sends the first configuration information to the first device, and the first configuration information is used to configure the first device to report the first indication information by using different options.

Option 1: If the first configuration information is used to configure a codeword based on Case 1 or Case 2, the first configuration information may indicate that a quantity of reference signals reported by the first device is W and a quantity of codewords associated with the W reference signals is V

In this case, based on Option 1, the first indication information reported by the first device in S205 indicates indexes of W reference signals and codewords or indexes of codewords associated with all of the W reference signals. For the wth reference signal in the W reference signals, $v_w$ associated codewords or codeword indexes are reported. The W reference signals are reference signals in the M reference signals, $v_w$ is a positive integer, and $\sum_{w=1}^{W} v_w = V$

. An index of the vth codeword in V codewords is an index in codewords associated with a reference signal corresponding to the codeword. In this case, the second device may determine one beam group from a correspondence between a reference signal resource index and a beam group in S202 based on one reference signal resource index reported by the first device. Further, the second device determines, based on a correspondence between a codeword and a beam in a case of the reference signal, one beam from the beam group by using one codeword that is associated with the reported reference signal and that is reported by the first device. The determined beam is the effective beam reported by the first device. For example, if the first configuration information is used to configure a codeword based on the example in Case 2, and the first device reports an index of the second reference signal and an index corresponding to the codeword exp($j \times \pi/2$), a reference signal resource index reported by the first device is the index corresponding to the second reference signal, and the reported codeword index is an index of exp($j\times\pi$/2) in { exp($j\times0$), exp($j\times\pi$/2), exp($j\times\pi$), exp($j\times3\pi$/2)}, that is, 1 (when indexes of the codewords are 0 to 3) or 2 (when indexes of the codewords are 1 to 4). After receiving the first indication information reported by the first device in S205, the second device can determine that the effective beam reported by the first device is the second beam in a beam group associated with the second reference signal.

Option 2: If the first configuration information is used to configure L different codewords based on Case 1 or configure L different codewords based on Case 3, the first configuration information may be used to configure a quantity V of codewords or a quantity V of codeword indexes reported by the first device.

In this case, based on Option 2, the first indication information reported by the first device in S205 includes V codewords or V codeword indexes, and the V codewords indicated by the first indication information are V codewords in the L codewords configured by using the first configuration information. An index of the vth codeword in the V codewords is an index of the codeword in the L codewords. For example, an index of the ith codeword associated with the mth reference signal in the M reference signals is $\sum_{n=1}^{m-1} R_n + (i-1)$ or $\sum_{n=1}^{m-1} R_n + i$, where $i = 1,2,...,R_m$. The second device may directly determine one beam based on a correspondence between a codeword and a beam by using one codeword reported by the first device. The determined beam is the effective beam reported by the first device. For example, if the first configuration information is used to configure a codeword based on the example in Case 3, and the first device reports an index corresponding to the codeword exp($j\times15\pi$/14) in the plurality of codewords associated with the second reference signal, the codeword index reported by the first device is an index of exp($j\times15\pi$/14) in {exp($j\times2\pi$/7), exp($j\times4\pi$/7), exp($j\times11\pi$/14), exp($j\times6\pi$/7), exp($j\times15\pi$/14), exp($j\times44\pi$/35), exp($j\times9\pi$/7), exp($j\times11\pi$/7), exp($j\times58\pi$/35), exp($j\times25\pi$/14), exp($j\times29\pi$/14), exp($j\times72\pi$/35), exp($j\times86\pi$/35)}, that is, 4 (when indexes of the codewords are 0 to 12) or 5 (when indexes of the codewords are 1 to 13). After receiving the first indication information reported by the first device in S205, the second device can determine that the effective beam reported by the first device is the second beam in a beam group associated with the second reference signal.

Optionally, the first configuration information in Option 1 and Option 2 may be further used to configure the first device to report amplitude information and/or energy information of the V codewords. For example, the energy information includes RSRP information.

Optionally, the first configuration information sent by the second device in S203 may indicate a manner, for example, periodic reporting, semi-static reporting, or aperiodic reporting, in which the first device reports the first indication information in S205. Certainly, alternatively, the first configuration information sent by the second device in S203 may not indicate a manner in which the first device reports the measurement result, and the first device uses a default reporting manner.

It may be understood that sending in S202 and S203 may be performed by using a same message or may be performed by using different messages, and this is not limited in this embodiment of this application.

It may be understood that the second device may perform S203 once for one time of beam grouping, or may perform S203 once for a plurality of times of grouping.

S204: The second device sends the M reference signals on the resources configured for the first device in S202.

For one time of grouping, the second device sends, on the resources configured for the first device in S202, 2-port reference signals by using beam groups corresponding to the configured resources. If the second device groups beams a plurality of times in S201, S204 is performed a plurality of times.

Optionally, when the second device sends the mth reference signal in the M reference signals, the mth reference signal has two ports. The second device determines a beamforming parameter of a port 1 based on $R_m$ beams corresponding to the mth reference signal, and determines a beamforming parameter of a port 2 based on the $R_m$ beams corresponding to the mth reference signal and $R_m$ codewords associated with the mth reference signal. The beam corresponding to the mth reference signal is determined by the second device, and reference is made to S201. At least one codeword associated with the mth reference signal is determined by using the first configuration information, and reference is made to S202.

For example, a beamforming parameter (for example, a beamforming vector) of each beam in one beam group corresponding to the mth reference signal is {bi}, where $i = 1,2,...,R_m$. bi is a beamforming vector in the ith beam direction in the beam group, for example, may be a vector in a discrete fourier transform (discrete fourier transformation, DFT) base. $R_m$ is a quantity of codewords that are associated with the mth reference signal and that are configured by the second device for the first device by using the first configuration information. The beamforming parameter of the port 1 is determined based on $\Sigma b_i$, and the reference signal sent on the port 1 is determined based on $\Sigma b_i \times s_1$. The beamforming parameter of the port 2 is determined based on $\Sigma t_i b_i$. ti is the ith codeword associated with the mth reference signal. For a specific form, refer to the process of configuring the codeword by using the first configuration information in S203. The reference signal sent on the port 2 is determined based on $\Sigma t_i b_i \times s_2$. s1 and s2 are signals agreed on between the second device and the first device on the port 1 and the port 2. For example, the signals s1 and s2 may be determined based on resource element (resource element, RE) locations corresponding to the two ports of the reference signal in NR. In the reference signal sending method, the second device can scan a plurality of directions when sending one reference signal, and a second port of the reference signal is multiplied by different codewords in different beam directions, so that the first device determines a transmission beam, of the second device, from which a received reference signal comes. In addition, the codeword ti is set to a point on a complex plane unit circle, so that no amplitude loss is caused to the sent reference signal, thereby achieving a specific anti-noise effect.

Optionally, the first device measures the mth reference signal based on the following assumptions:

A sent signal of a first port in the two ports is determined based on s1; and/or
a sent signal of a second port in the two ports is determined based on $t_i \times s_2$, where $t_i$ is the ith codeword associated with the mth reference signal, and $i = 1,2,...,R_m$.

Optionally, for the mth reference signal, the first device determines that the second device sends s1 on the first port in each beam direction in the beam group and sends $t_i \times s_2$ on the second port in each direction in the beam group.

S205: After measuring the reference signal sent by the second device in S204, the first device sends the first indication information to the second device.

Optionally, the first device performs normalization processing on the received reference signals in a manner agreed on between the second device and the first device. For example, for the mth reference signal in the example of S204, the first device determines that the second device sends s1 on the first port in each beam direction in the beam group and sends $t_i \times s_2$ on the second port in each direction in the beam group. In this case, the first device respectively divides the received signal on the first port and the received signal on the second port by s1 and s2 in S205, and then performs subsequent processing.

Optionally, if in S203, the second device indicates, in the first configuration information, the manner in which the first device reports the first indication information, the first device reports the first indication information based on the first configuration indication information. If in S203, the second device does not indicate, in the first configuration information, the manner in which the first device reports the first indication information, the first device reports the first indication information to the second device in a default manner.

Optionally, for the M reference signals, the first device reports the first indication information based on the different reporting options indicated by the first configuration information in S203.

For Option 1, the first indication information reported by the first device indicates the indexes of the W reference signals and the codewords or the indexes of the codewords associated with all of the W reference signals. The wth reference signal in the W reference signals is associated with $v_w$ codewords.

For example, the first device first selects W reference signals from the M reference signals as reference signals that need to be reported. In a method for selecting the W reference signals, W reference signals with relatively large energy or relatively large amplitude in the M reference signals may be selected. Then the first device determines $v_w$ codewords of each reference signal based on measurement results on two ports of the W reference signals. A method for determining the codeword is as follows: For a reference signal that needs to be reported, a 2-port measurement phase difference of the reference signal is measured, and then a codeword that has a smallest difference from the phase difference is selected from at least one codeword associated with the reference signal. For Option 1, an index corresponding to a codeword is an index of the codeword in $R_m$ codewords corresponding to the reference signal. For example, the codeword indicated by the first configuration information is consistent with the codeword exemplified in Case 2 in S203. The second device indicates, in the first configuration information in S203, the first device to report one reference signal resource index and one codeword based on Option 1. In this case, W=1 and V=1. The first device receives three reference signals, RSRP energy of the second reference signal is the largest, a 2-port phase difference of the second reference signal is $0.4\pi$, and codewords associated with the second reference signal are {exp($j\times0$), exp($j\times\pi/2$), exp($j\times\pi$), exp($j\times3\pi/2$)}. Obviously, the codeword exp($j\times\pi/2$) is closest to exp($j\times0.4\pi$). Therefore, the first device reports an index of the second reference signal and the codeword exp($j\times\pi/2$) or an index of the codeword exp($j\times\pi/2$) (the reported codeword index is 1 when indexes of the codewords are 0 to 3, and the reported codeword index is 2 when indexes of the codewords are 1 to 4).

For Option 2, the first indication information reported by the first device includes reporting V codewords or codeword indexes. In this case, the first device first selects W reference signals from the M reference signals as reference signals that need to be reported. For a selection method, refer to Option 1. Then V codewords are determined based on measurement results on two ports of the W reference signals. A method for determining the codeword is as follows: For a reference signal that needs to be reported, a 2-port measurement phase difference of the reference signal is measured, and then a codeword that has a smallest difference from the phase difference is selected from at least one codeword associated with the reference signal. For example, if the codeword indicated in the first configuration information is consistent with the codeword exemplified in Case 3 in S203, the second device indicates, in the first configuration information in S203, the first device to report one codeword based on Option 2. In this case, V=1. The first device receives three reference signals, RSRP energy of the second reference signal is the largest, a 2-port phase difference of the second reference signal is $\pi$, and codewords associated with the second reference signal are {exp($j\times4\pi/7$), exp($j\times15\pi/14$), exp($j\times11\pi/7$), exp($j\times29\pi/14$)}. Obviously, the codeword exp($j \times 15\pi/14$) is closest to exp($j \times \pi$). Based on the example in Option 2 in S203, an index of the codeword exp($j \times 15\pi/14$) in all of the L codewords is 4 (when indexes of the codewords are 0 to 12) or 5 (when indexes of the codewords are 1 to 13). Therefore, the first device reports the codeword exp($j*15\pi/14$) or the index of the codeword.

Optionally, the first device sends third indication information to the second device. The third indication information indicates at least one of first amplitude information and first energy information that correspond to the V codewords, and the first amplitude information corresponding to the V codewords includes amplitude information corresponding to each of the V codewords. The first energy information corresponding to the V codewords includes energy information corresponding to each of the V codewords. The at least one of the first amplitude information and the first energy information is a quantized result. A specific quantization manner and specific quantization precision may be predefined or may be configured by the second device.

S206: The second device estimates each beam between the second device and the first device based on the first indication information, and determines one or more beams for sending a signal. The second device may determine effective transmission beams between the second device and the first device based on a correspondence between the L codewords and the L beams and codewords reported by the first device.

Optionally, if the first device reports corresponding amplitude information and/or energy information, the second device may estimate gains of the determined effective beams based on the amplitude information and/or the energy information reported by the first device, and further perform selection from the effective beams based on the amplitude information and/or the energy information.

In the foregoing method 200, the second device may group a plurality of beams a plurality of times. Grouping is performed a plurality of times, so that beams that cover a plurality of effective paths between the second device and the first device appear in different groups as far as possible, thereby avoiding a case in which more than one effective path is covered by beams in a same beam group, and therefore the first device cannot estimate an effective beam by using a measurement result of a reference signal. The second device configures one 2-port reference signal for each beam group. The first device measures a plurality of beams in the beam group by using the 2-port reference signal, so that a beam training speed can be improved, and reference signal overheads can be reduced. Each reference signal configured by the second device is associated with a plurality of codewords, and each of the plurality of codewords is associated with one beam. When the second device sends the 2-port reference signal, a signal of a second port is multiplied by a corresponding codeword in different beam directions, in other words, 2-port phase differences in different beam directions are different. On a millimeter-wave band, because of a sparse characteristic of a channel, a quite small quantity of effective paths exist between the second device and the first device. When there are a relatively large quantity of antenna elements, a probability that a quantity of effective beams in one beam group does not exceed 1 is quite large. Therefore, when energy of a reference signal received by the first device is relatively large, it is very likely that most of the energy comes from one beam direction. 2-port phase differences of a reference signal received by the first device are different in different effective beam directions, so that an effective beam direction can be inferred when a reference signal resource is shared in a plurality of beam directions. For example, the second device supports 64 beams. In the conventional technology, one beam corresponds to one reference signal resource, and there are a total of 64 reference signal resources. The second device sends a reference signal on a resource corresponding to each beam. The first device measures the reference signal, reports a measurement result (for example, RSRP) and a reference signal resource index. The second device may determine a beam based on the reference signal resource index and the measurement result. In this embodiment of this application, the second device divides supported 64 beams into 16 groups each including four beams. The second device needs to configure 16 2-port reference signals and codewords corresponding to 16 beam groups. One beam group corresponds to one 2-port reference signal. The first device measures the 2-port reference signal. A reported measurement result includes a reference signal index and a codeword or includes only a codeword. In this case, the network device may determine at least one beam group based on the reference signal index, and determine a beam from the at least one beam group based on the codeword, or directly determine a beam based on the codeword, so that resource overheads can be reduced.

The following specifically describes a process of determining a beam in the method 200. The following uses, for description, an example in which the beams are evenly grouped, the reference signal is a CSI-RS, the first device is a terminal device, and the second device is a network device. However, embodiments of this application are not limited thereto.

Step 1: Group beams.

The network device supports a total of S optional beams. The network device may group the S optional beams H times. The S beams are divided into M groups during each time of grouping, each beam group includes R beams (a quantity of beam directions in one group obtained through grouping may be less than R), and one beam corresponds to one beam direction. H, S, M, and R are positive integers. For example, if H=1, S=64, and M=16, R=4.

Based on a fully connected radio frequency channel antenna element structure, a multi-panel antenna structure, or another antenna structure, the network device can simultaneously send different reference signals in R beam directions.

Step 2: Configure resources.

The network device configures one 2-port non-zero power CSI-RS (non zero power CSI-RS, NZP-CSI-RS) resource for each beam group in each time of grouping, in other words, one beam group in one time of beam grouping corresponds to one 2-port NZP-CSI-RS resource. If the network device may configure M 2-port NZP-CSI-RS resources for one time of grouping, H*M 2-port NZP-CSI-RS resources are configured for H times of grouping. The H*M 2-port NZP-CSI-RS resources configured by the network device may be periodic, semi-static, or aperiodic, and each 2-port NZP-CSI-RS is bound to one beam group in one time of grouping.

For periodic resources, the network device needs to configure at least M 2-port NZP-CSI-RS resources in one period, and the M 2-port NZP-CSI-RS resources need to be in different symbols. In this way, when the network device sends M 2-port NZP-CSI-RSs, the sending can be staggered in time.

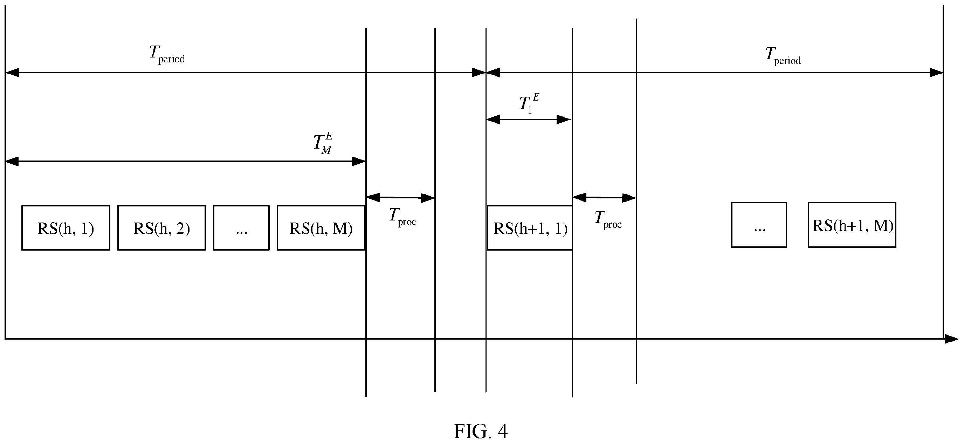

In addition, if a period of the periodic resources configured by the network device is $T_{period}$, an offset (offset) of an end moment of the Mth 2-port NZP-CSI-RS resource relative to the period is $T_M^E$, and an offset (offset) of an end moment of the first 2-port NZP-CSI-RS resource relative to the period is $T_1^E$, $T_{period} - T_M^E + T_1^E > T_{proc}$ needs to be ensured. $T_{proc}$ is processing time of reference signals in one period after the terminal device receives the reference signals in the period, and $T_{proc}$ may be determined by the terminal device and the network device through signaling exchange. In other words, for the periodic resources configured by the network device, it needs to be ensured that the terminal device has enough time to process reference signals in one period between two periods. As shown in FIG. 4, RS(h, 1) represents the first reference signal resource in one period $T_{period}$ in the hth time of grouping, RS(h, 2) represents the second reference signal resource in one period $T_{period}$ in the hth time of grouping, and RS(h, M) represents the Mth reference signal resource in one period $T_{period}$ in the hth time of grouping. RS(h+1, 1) represents the first reference signal resource in one period $T_{period}$ in the (h+1)th time of grouping, and RS(h+1, M) represents the Mth reference signal resource in one period $T_{period}$ in the (h+1)th time of grouping. The hth time of grouping and the (h+1)th time of grouping are two adjacent times of grouping in H times of grouping.

For semi-static resources, the network device needs to configure at least M 2-port NZP-CSI-RS resources in one period, and the M 2-port NZP-CSI-RS resources need to be in different symbols. In this way, when the network device sends reference signals on the M 2-port NZP-CSI-RS resources by using M beam groups, the sending can be staggered in time. In addition, the semi-static resources configured by the network device need to remain active for at least H periods. In addition, $T_{period} - T_M^E + T_1^E > T_{proc}$ needs to be ensured. For descriptions of these parameters, refer to the periodically configured resources.

For aperiodic resources, the network device needs to configure H NZP-CSI-RS resource sets, each NZP-CSI-RS resource set includes M 2-port NZP-CSI-RS resources, and 2-port NZP-CSI-RS resources in each NZP-CSI-RS resource set need to be in different symbols. In this way, when the network device sends reference signals on the M 2-port NZP-CSI-RS resources by using M beam groups, the sending can be staggered in time.

Step 3: Perform configuration measurement.

The network device sends a CSI-reporting instruction to the terminal device. The CSI-reporting instruction is used to configure the terminal device to measure a reference signal and report a measurement result. The CSI-reporting instruction includes information used to indicate a resource that is configured in step 2 and on which the terminal device is to measure a reference signal, and a value of a nrofBeamEachRS field in the CSI-reporting instruction is R. The nrofBeamEachRS field is a field newly added for this beam training solution in this embodiment of this application, and R is a quantity of each group of beam directions in step 1. The network device may indicate, in two manners, R codewords corresponding to each reference signal.

Manner 1: The network device indirectly configures, by configuring the quantity R of each group of beam directions, R codewords corresponding to each reference signal as { $\exp(j \times 0)$, $\exp(j \times 2\pi/R)$, $\exp(j \times 4\pi/R)$, ..., $\exp(j \times 2(R-1)\pi/R)$}. This corresponds to Case 2 in the foregoing method 200.

Manner 2: The network device indirectly configures, by configuring the quantity R of each group of beam directions and the quantity M of reference signals, R codewords corresponding to the mth reference signal as { $\exp(j \times 0 + j \times 2m\pi/Y)$, $\exp(j \times 2\pi/R + j \times 2m\pi/Y)$, $\exp(j \times 4\pi/R + j \times 2m\pi/Y)$, ..., $\exp(j \times 2(R-1)\pi/R + j \times 2m\pi/Y)$}, where m ranges from 0 to M-1, or m ranges from 1 to M.

Y is a minimum prime number greater than M and R, or Y=MR. This corresponds to Case 3 in the foregoing method 200.

Optionally, the network device may indicate, to the terminal device by using related signaling, whether the network device uses Manner 1 or Manner 2; or the network device may not indicate, to the terminal device, whether the network device uses Manner 1 or Manner 2, and for the network device and the terminal device, one of the manners is used by default according to a predefined rule.

A nrofReportedRS field in the reference signal reporting instruction is set to W, in other words, indicates that the terminal device needs to report measurement results of W reference signals in the M reference signals. W may be a quantity of effective paths (also referred to as effective beams) between the network device and the terminal device that are estimated by the network device.

Optionally, the network device may configure the following specific content reported by the terminal device for each reference signal.

Option 1: When the codeword is configured in Manner 1 or Manner 2 or is not configured in the foregoing CSI-reporting, the network device may configure the terminal device to report a reference signal resource index and a quantized 2-port phase difference result of a reference signal corresponding to the index. A phase difference quantization manner may be converting a phase difference into a phase difference in $[0, 2\pi)$ and then performing X-bit even quantization by default.

Option 2: When the codeword is configured in Manner 1 or Manner 2 in the foregoing CSI-reporting, the network device may configure the terminal device to report a reference signal resource index and an index of one codeword associated with a reference signal in all codewords associated with the reference signal. This corresponds to reporting V=W codewords in Option 2 in the foregoing method S203.

Option 3: When the codeword is configured in Manner 2 in the foregoing CSI-reporting, the network device configures the terminal device to report one codeword in a case of a reference signal or an index of the codeword in all codewords. This corresponds to reporting V=W codewords in Option 3 in the foregoing method S203.

Optionally, the CSI-reporting may further indicate the terminal to report amplitude information and/or RSRP information of the reported reference signal. The amplitude information and/or the RSRP information of the reference signal may be quantized amplitude information and/or quantized RSRP results on 2-port amplitude of the received reference signal, or may be a quantized result obtained by performing weighted averaging for the 2-port amplitude. Quantization is precise to X bits predefined in a predefined range.

Optionally, the CSI-reporting may further indicate a manner in which the terminal device reports the measurement result of the reference signal, and the terminal device may periodically, semi-statically, or aperiodically report the measurement result of the reference signal.

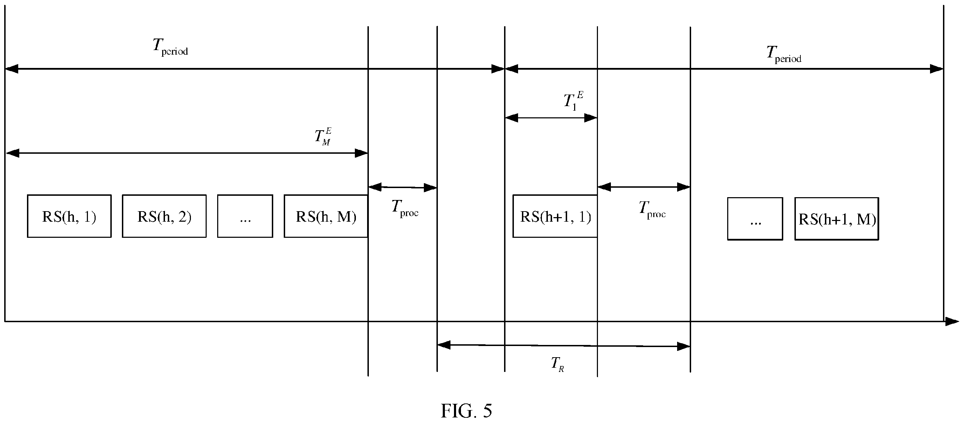

Optionally, if the CSI-reporting indicates that the terminal device periodically reports the measurement result of the reference signal, the resources configured in step 2 are also periodic, and a period of reporting the reference signal by the terminal device and the period of the resources in step 2 are the same and are $T_{period}$. In this way, it can be ensured that the terminal device can report the measurement result once after measuring reference signals in one period. A relationship between an offset $T_R$ of a reporting moment in the period and the period of the configured resources needs to meet $T_M^E + T_{proc} < T_R < T_{period}$ or $0 < T_R < T_1^E + T_{proc}$. FIG. 5 shows an optional time range of the reporting moment $T_R$. $T_M^E + T_{proc} < T_R < T_{period}$ indicates that the terminal device needs to report the measurement result after receiving and processing the last reference signal in one time of grouping and before one period ends. $0 < T_R < T_1^E + T_{proc}$ indicates that the terminal device needs to report the measurement result after receiving and processing the first reference signal in a next period. This setting can ensure that the measurement result reported by the terminal device once is exactly results of some of M reference signals in one time of beam grouping.

Optionally, if the CSI-reporting instruction indicates that the terminal device semi-statically reports the measurement result of the reference signal, the resources configured in step 2 may be periodic or semi-static. In addition, a period of reporting the reference signal by the terminal device and a period of the periodic resources or a period of the semi-statically configured resources in step 2 are $T_{period}$. In this way, it can be ensured that the terminal device can report the measurement result once after measuring reference signals in one period. A relationship between a reporting moment $T_R$ and the period of the configured resources needs to meet $T_M^E + T_{proc} < T_R < T_{period}$ or $0 < T_R < T_1^E + T_{proc}$. This is consistent with the foregoing periodic reporting. This setting can ensure that the measurement result reported by the terminal device once is exactly results of some of M reference signals in one time of beam grouping.

Optionally, if the CSI-reporting instruction indicates that the terminal device aperiodically reports the measurement result of the reference signal, the resources configured in step 2 may be periodic, semi-static, or aperiodic. The network device needs to send the reference signal reporting instruction H times, and each time the reference signal reporting instruction is sent, the terminal device reports the measurement result once.

Step 4: The network device sends 2-port NZP-CSI-RSs on the resources configured in step 2.

In step 4, the network device sends, based on a correspondence that is between each beam group in each time of grouping and a 2-port NZP-CSI-RS resource and that is determined in step 2, a 2-port NZP-CSI-RS by using beams in a beam group on a 2-port NZP-CSI-RS resource corresponding to the beam group.

For example, a spatial domain filter parameter (for example, a beamforming vector) of each beam in one beam group corresponding to the mth reference signal is {bi}, where i=1, 2, ..., or R. bi is a spatial domain filter parameter in the ith beam direction in the beam group, for example, may be a vector in a DFT base. A spatial domain filter parameter of the network device on a port 1 of the mth reference signal may be $\Sigma b_i$. A spatial domain filter parameter of a port 2 is $\Sigma t_i b_i$. If the network device configures a codeword for the terminal device in step 3, ti needs to be consistent with a codeword configured for each reference signal. If the network device does not configure a codeword for the terminal device in step 3, ti may depend on implementation of the network device. However, in principle, any two elements in {ti} corresponding to a same reference signal are different. In a method for determining {ti} by the network device, the network device determines the codeword in Manner 1 or Manner 2 in step 3 to make {ti} consistent with the codeword.

For example, when the network device configures a quantity of beam directions in one group as R=4 by using the CSI-reporting in step 3, the network device and the terminal device generate, in Manner 1 according to an indication or a default rule, codewords ti corresponding to each reference signal, where i=1, 2, 3, or 4. The codewords corresponding to each reference signal are { exp($j\times$0), exp($j\times\pi$/2), exp($j\times\pi$), exp($j\times$3$\pi$/2)}. For a 2-port reference signal that needs to be sent, the network device sends the reference signal in four beam directions bound to the reference signal. If beamforming vectors of four beam directions in one group of beam directions bound to the reference signal are b1, b2, b3, and b4, a signal sent by the network device on an NZP-CSI-RS resource of a first port is (b1+b2+b3+b4)s1, and a signal sent by the network device on an NZP-CSI-RS resource of a second port is ($t_1\boldsymbol{b_1}$ + $t_2\boldsymbol{b_2}$ + $t_3\boldsymbol{b_3}$ + $t_4\boldsymbol{b_4}$) $\times$ $s_2$. s1 is a reference signal value that is on the first port and that is agreed on between the network device and the terminal device, and s2 is a reference signal value that is on the second port and that is agreed on between the network device and the terminal device. A manner of determining s1 and s2 may be a current manner of determining an NZP-CSI-RS baseband signal based on an RE time-frequency location of a reference signal in NR. From a perspective of the terminal device, the reference signal sending manner equivalently means that the network device sends the signal s1 on the first port in each of four directions, and separately sends signals t1s2, t2s2, t3s2, and t4s2 on the second port in the four directions.

In step 4, the network device may sequentially send, by using M beam groups obtained through one time of grouping, 2-port NZP-CSI-RSs on 2-port NZP-CSI-RS resources corresponding to the M beam groups. In this way, after the network device sends, by using the M beam groups obtained in one time of grouping, the 2-port NZP-CSI-RSs on the 2-port NZP-CSI-RS resources corresponding to the M beam groups, the network device may send, by using M beam groups obtained through another time of grouping, 2-port NZP-CSI-RSs on 2-port NZP-CSI-RS resources corresponding to the M beam groups. By analogy, the network device may send H*M 2-port NZP-CSI-RSs on H*M 2-port NZP-CSI-RS resources by using beams obtained through H times of grouping.

Step 5: The terminal device measures the 2-port NZP-CSI-RS in step 4, and reports a measurement result to the network device.

The terminal device receives the 2-port NZP-CSI-RS sent by the network device in step 4, and measures the received reference signal. The terminal device receives the 2-port NZP-CSI-RS sent by the network device, and obtains a phase or amplitude and a phase of the 2-port NZP-CSI-RS through measurement. Normalized NZP-CSI-RS baseband signals received by the terminal device on two ports of a 2-port NZP-CSI-RS resource RS(h, m) are $y_1^{h,m}$ and $y_2^{h,m}$.

Phases of the baseband signals in [0, 2$\pi$) are $\theta_1^{h,m}$ and $\theta_2^{h,m}$, a value of h is 1, 2, ..., or H, and a value of m is 1, 2, ..., or M. The value of h is fixed for one time of grouping. Normalization means dividing the received baseband reference signals by sent baseband reference signals that are at corresponding time-frequency locations and that are agreed on between the terminal device and the network device. In other words, normalization is separately performed based on s1 and s2.

For M reference signals in one time of grouping, the terminal device first selects W reference signals from the M reference signals for reporting. W is a value of the nrofReportedRS field when the network device triggers the CSI-reporting instruction in step 3. In a possible implementation, the terminal device selects W reference signals for which

$$\alpha_1\left|y_1^{h,m}\right| + \alpha_2\left|y_2^{h,m}\right|$$

is relatively large. In another possible implementation, the terminal device selects W reference signals for which $\alpha_1\left|y_1^{h,m}\right|^2 + \alpha_2\left|y_2^{h,m}\right|^2$ is relatively large. $\alpha_1$ and $\alpha_2$ are weighting coefficients of two ports, and may be preset values or may be configured by the network device.

For each reference signal that needs to be reported, the terminal device reports a measurement result based on the configuration options of the network device in step 3.

For Option 1, the terminal device reports a reference signal resource index and a quantized 2-port reference phase difference result corresponding to the index. A phase difference quantization manner may be converting a phase difference into a phase difference in [0, 2$\pi$), that is, $\theta^{h,m} = \mathrm{mod}(\theta_2^{h,m} - \theta_1^{h,m}, 2\pi)$, and then quantizing the phase difference by default.

For Option 2, the terminal device reports a reference signal resource index and an index of one codeword associated with a reference signal in all codewords associated with the reference signal. In a possible implementation of determining the codeword index that needs to be reported, a codeword {tr} associated with the reference signal is first determined based on configuration information related to the CSI-reporting instruction of the network device in step 3, and the codeword index r$^{h,m}$ that needs to be reported is determined based on the formula (1).

A physical meaning of the formula (1) is that there is a 2-port phase difference of an NZP-CSI-RS sent by the network device in each beam direction. When effective beam directions (beam directions in which the network device and the terminal device can communicate) between the network device and the terminal device are different, 2-port phase differences of a reference signal that are obtained by the terminal device through measurement are also different.

A codeword that makes the right side of the formula (1) achieve the minimum corresponds to an effective beam direction between the network device and the terminal device. In this embodiment of this application, any transformation may be made to the formula (1), and a physical meaning of a formula obtained after the transformation is similar to the physical meaning of the formula (1). In this case, one codeword corresponds to one beam, and the network device may determine a corresponding beam based on the phase index reported by the terminal device.

$$r^{h,m} = \arg\min_{r} \left\| t_r y_1^{h,m} - y_2^{h,m} \right\|^2 \quad (1)$$

For example, four codewords associated with one NZP-CSI-RS reported by the terminal device are {exp(j*0), exp(j*π/2), exp(j*π), exp(j*3π/2)}. The network device sends the NZP-CSI-RS in four beam directions bound to the reference signal, and the terminal device receives, at a resource location of the 2-port NZP-CSI-RS, a superimposed signal obtained after the NZP-CSI-RS sent in the four beam directions undergoes channel attenuation. Assuming that a beam in the first beam group (for example, the third beam in the first group) overlaps an effective path between the terminal device and the network device, and an equivalent channel gain of the effective path in the beam direction is h, $y_1^{h,1}$ received by the terminal device on the first port is hs1 or is close to hs1, and $y_2^{h,1}$ received by the terminal device on the second port is $h\,e^{j\frac{3\pi}{2}}s_1$ or is close to $h\,e^{j\frac{3\pi}{2}}s_1$. Because beams other than the third beam in the first beam group do not have an effective path, NZP-CSI-RSs that are received by the terminal device and that are sent by the other beams are 0 or are close to 0. The terminal device may obtain a codeword index 2 (an index in 0 to 3) based on the received signal and the formula (1).

For Option 3, the terminal device reports an index of one codeword associated with a reference signal in all codewords. In a possible implementation of determining the codeword index that needs to be reported, the terminal device first determines, based on configuration information related to the CSI-reporting instruction of the network device in step 3, R codewords $\{t_r\}$ associated with the reference signal, and then determines, based on the formula (1), an index $r^{h,m}$ of the codeword in the $R_m$ codewords associated with the reference signal. Assuming that the reported reference signal is the mth reference signal in the M reference signals, the index and (m-1)R are added and used as the codeword index for reporting. For example, if the network device configures two reference signals for the terminal device, and each reference signal is associated with R=4 codewords, the terminal device determines, based on the configuration information related to the CSI-reporting instruction of the network device in step 3, that codewords associated with the first reference signal and the second reference signal are respectively { exp($j\times$0), exp($j\times\pi$/2), exp($j\times\pi$), exp($j\times$3$\pi$/2) } and { exp($j\times$2$\pi$/5), exp($j\times$9$\pi$/10), exp($j\times$14$\pi$/10), exp($j\times$19$\pi$/10)}. The terminal device selects, for reporting, one codeword associated with the reference signal 2, and the terminal device obtains a 2-port phase difference 1.5$\pi$ of the reference signal 2 through measurement. In this case, the terminal device may determine, based on the formula (1), that a codeword that needs to be reported is exp($j\times$14$\pi$/10). $r^{h,m}$ corresponding to the codeword is 2 (an index in 0 to 3). The index and (m-1)R are added, and therefore a codeword index finally reported by the terminal device is 2+1*4=6.

Optionally, if the network device configures that the terminal device needs to report amplitude information or energy information of the reference signal measurement value in step 3, in step 5, for a reference signal that needs to be reported, the terminal device further needs to report respective quantized amplitude values $\hat{y}_1^{h,m}$ and $\hat{y}_2^{h,m}$ of $y_1^{h,m}$ and $y_2^{h,m}$ or respective quantized energy values of $y_1^{h,m}$ and $y_2^{h,m}$.

Step 6: The network device determines a beam based on the measurement result reported by the terminal device.

For different reporting options of the terminal device, the network device may determine the beam in different manners.

If Option 1 is used for performing reporting by the terminal device in step 5, the network device determines an effective beam in two cases in step 6.

Case 1: If the measurement result reported by the terminal device does not include amplitude information or energy information of the reference signal, for each time of grouping, the network device may determine one beam group for one reported NZP-CSI-RS, and the network device compares a quantized 2-port phase difference value reported by the terminal device with phase differences of the 2-port reference signal sent on beams in the beam group in step 4, and determines, through comparison, a direction of a phase difference that is in the 2-port phase differences of the reference signal sent by the network device in directions of this group and that is closest to the quantized phase difference value reported by the terminal device, to estimate the corresponding direction in the directions of this group that is an effective transmission direction. Each time the terminal device reports one reference signal, the network device may estimate one effective beam direction. A plurality of effective beam directions estimated based on reference signals in different grouping may overlap.

Case 2: If the measurement result reported by the terminal device includes amplitude information or energy information of the reference signal, the beam is determined by performing the following three steps.

(a) The network device searches a plurality of times of grouping for grouping with highest isolation. The highest isolation indicates that if there are a plurality of effective paths between the terminal device and the network device, a plurality of beams that cover the plurality of effective paths belong to different groups obtained by the network device through one time of grouping. For a reported result reported by the terminal device in the hth time of grouping, the network device counts a quantity $G_h$ of reference signals whose 2-port weighted average amplitude values or energy values in this time of grouping are greater than a preset threshold. The quantity is equivalent to a quantity of groups including effective beams in this time of grouping. Because a quantity of effective beams is the same in an entire channel environment, a measurement effect obtained by dividing all effective beams into different groups during beam grouping is optimal. Therefore, one or more times of grouping with a maximum value of $G_h$ are defined as grouping with highest isolation.

(b) If the grouping with highest isolation in (a) includes a plurality of times of grouping, in each time of grouping, one beam group may be determined for each NZP-CSI-RS, and the network device compares a quantized 2-port phase difference value reported by the terminal device with phase differences of the 2-port reference signal sent on beams in the beam group in step 4, and determines, through comparison, a direction of a phase difference that is in the 2-port phase differences of the reference signal sent by the network device in directions of this group and that is closest to the quantized phase difference value reported by the terminal device, to estimate the corresponding direction in the directions of this group that is an effective transmission direction. In addition, an error between the phase difference reported by the terminal device and an actual phase difference of the network device in the effective beam direction may be further obtained. Error sums in all times of grouping are counted, so that grouping with a smallest error sum in the plurality of times of grouping with highest isolation can be found and used as optimal grouping, and a plurality of estimated effective beam directions corresponding to this time of grouping can be used as effective beam directions determined by the network device. If the grouping with highest isolation in (a) includes one time of grouping, an effective beam direction in this time of grouping is directly estimated.

(c) The network device estimates a gain of the effective beam direction. If the terminal device further reports a quantized amplitude value or a quantized energy value of each reference signal, a gain of each effective beam direction output in (b) may be estimated, so that further selection is made from these effective beam directions.

If Option 2 is used for performing reporting by the terminal device in step 5, the network device determines an effective beam in two cases in step 6.

Case 1: If the measurement result reported by the network device does not include amplitude information or energy information of the reference signal, the network device may determine, based on the reference signal resource index reported by the terminal device, a codeword and one beam group that are associated with the reference signal resource index, and the network device may determine one beam in the beam group based on the codeword index reported by the terminal device and the correspondence between a codeword and a beam in step 4. Therefore, each time the terminal device reports a measurement result of one reference signal, the network device may estimate one effective beam direction. A plurality of effective beam directions estimated based on reference signals in different grouping may overlap.

Case 2: If the measurement result reported by the terminal device includes amplitude information or energy information of the reference signal,

the network device searches a plurality of times of grouping for grouping with highest isolation. For details, refer to the search for the grouping with highest isolation in (b). Then the network device estimates an effective beam direction in the grouping with highest isolation with reference to Case 1. If the terminal device further reports a quantized amplitude value of each reference signal, a gain of each effective beam direction output in (b) may be estimated, so that further selection is made from these effective beam directions.

If Option 3 is used for performing reporting by the terminal device in step 5, the network device determines an effective beam in two cases in step 6.

Case 1: If the measurement result reported by the network device does not include amplitude information or energy information of the reference signal, the network device may determine one beam based on the codeword index reported by the terminal device and the correspondence between a codeword and a beam in step 4. Therefore, each time the terminal device reports one codeword index, the network device may estimate one effective beam direction. A plurality of effective beam directions estimated based on reference signals in different grouping may overlap.

Case 2: If the measurement result reported by the terminal device includes amplitude information or energy information of the reference signal, the network device searches a plurality of times of grouping for grouping with highest isolation. For details, refer to the search for the grouping with highest isolation in (b). Then the network device estimates an effective beam direction in the grouping with highest isolation with reference to Case 1. If the terminal device further reports a quantized amplitude value and/or a quantized energy value of each reference signal, a gain of each effective beam direction output in (b) may be estimated, so that further selection is made from these effective beam directions.

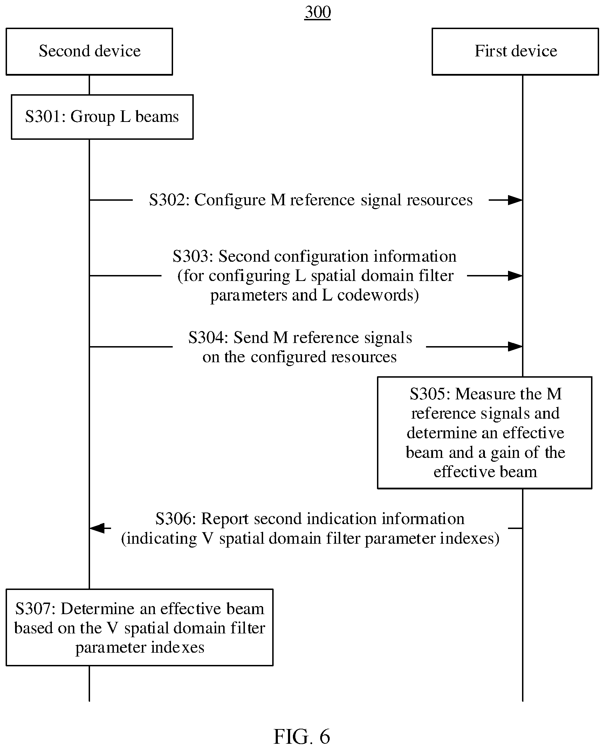

In the descriptions of the foregoing method embodiment, the second device configures the resources for the first device, and sends the first configuration information to the first device, the first device measures, based on the configured resources and the first configuration information, the reference signal sent by the second device, and reports the measurement result to the second device, and the second device determines the effective beam based on the measurement result. The following describes the beam training method in embodiments of this application with reference to a method 300 in FIG. 6. In the method 300, a second device configures resources for a first device, and sends second configuration information to the first device, and the first device may directly determine an effective beam direction and/or a channel gain of the effective beam direction based on measurement results of a plurality of times of beam grouping, and then report the effective beam direction and/or the channel gain of the effective beam direction. In other words, in S300, the second device directly indicates all beam training information to the first device, and the first device estimates a gain of each beam direction, and finally directly reports the effective beam direction (and the corresponding gain) estimated by the first device, instead of performing measurement reporting for each reference signal for each time of grouping.

The method 300 includes the following steps.

S301 is the same as S201.

S302 is the same as S202.

S303: The second device sends the second configuration information to the first device. The second configuration information is used to configure L spatial domain filter parameter indexes and L codewords, the mth reference signal in M reference signals is associated with $R_m$ codewords in the L codewords, the mth reference signal is further associated with $R_m$ spatial domain filter parameter indexes in the L spatial domain filter parameter indexes, M is a positive integer greater than 1, and $R_m$ is a positive integer.

Optionally, the L spatial domain filter parameter indexes are in a one-to-one correspondence with the L codewords, and the L codewords are in a one-to-one correspondence with the L beams. In other words, any two of the L spatial domain filter parameter indexes, the L codewords, and the L beams may be in a one-to-one correspondence.

Optionally, for a manner of configuring the L codewords and a relationship between the L codewords and the M reference signals in the second configuration information, refer to the manner of configuring the codeword in the first configuration information in S203.

Optionally, the L spatial domain filter parameters may be L beamforming parameters, for example, L vectors in a DFT base. The spatial domain filter parameter index corresponds to a beamforming vector index such as a DFT vector index.

Optionally, one spatial domain filter parameter corresponds to one beam in S301.

Optionally, the second configuration information explicitly indicates a spatial domain filter parameter index associated with each of the M reference signals. To be specific, the second configuration information includes M second fields, and the M second fields are separately used to configure associated spatial domain filter parameter indexes for the M reference signals.

Optionally, the second configuration information is used to configure a random seed, and the terminal device may determine, by using the random seed, the spatial domain filter parameter index associated with each of the M reference signals. The first device determines, based on the following assumptions, the spatial domain filter parameter index associated with each of the M reference signals: (1) The second device performs beam grouping in S301 by grouping beam indexes by using a predefined random grouping function and a random seed. In other words, when grouping the beams, the second device inputs the random seed to the random grouping function to obtain indexes of the beams obtained through grouping, and the second device groups the beams based on the indexes of the beams obtained through grouping. (2) The random seed used by the second device in S301 is consistent with the random seed carried in the second configuration information sent to the first device. (3) The first device inputs the random seed to the same predefined random grouping function in step (1) to obtain the indexes of the beams obtained through grouping. The indexes of the beams obtained through grouping are the L spatial domain filter parameter indexes associated with the M reference signals.

It should be noted that S303 is an optional step, the second device may not send the second configuration information to the first device, and the first device may perform reporting based on a preset configuration and a measurement result that is of the reference signal and that is obtained through measurement.

It may be understood that sending in S302 and S303 may be performed by using a same message or may be performed by using different messages, and this is not limited in this embodiment of this application.

S304 is the same as S204.

Optionally, the first device measures the mth reference signal based on the following assumptions:

A sent signal of a first port in two ports is determined based on $\Sigma b_i \times s_1$; and/or
a sent signal of a second port in the two ports is determined based on $\Sigma t_i b_i \times s_2$, where $t_i$ is the ith codeword associated with the mth reference signal, and i = 1,2,...,$R_m$.

Optionally, for the mth reference signal, the first device determines that the second device sends s1 on the first port in each beam direction in the beam group and sends $t_i \times s_2$ on the second port in each direction in the beam group.

Optionally, S301 to S304 are repeatedly performed H times. To be specific, the second device groups all beams H times, and sends a total of H*M reference signals. M reference signals in each time of grouping correspond to L codewords, and the M reference signals in each time of grouping correspond to L spatial domain filter parameters.

S305: The first device measures the M reference signals sent by the second device in S304, and determines V effective beams and gains of the V effective beams.

Optionally, the first device may determine beam grouping with relatively high beam isolation from the H times of beam grouping by comprehensively considering results of the H times of beam grouping, and then more accurately estimate the effective beams and the gains of the effective beams based on the grouping with relatively high beam isolation, to report spatial domain filter parameter indexes corresponding to the V effective beams.

S306: The first device sends second indication information to the second device. The second indication information indicates V spatial domain filter parameter indexes in the L spatial domain filter parameter indexes, and V is a positive integer less than or equal to L.

Optionally, the V spatial domain filter parameter indexes may be indexes of the V beams with relatively large gains in the estimated result of the first device in S305.

Optionally, the method 300 further includes: The first device sends fourth indication information to the second device. The fourth indication information indicates at least one of second amplitude information and second energy information that correspond to V spatial domain filter parameters. The second amplitude information includes amplitude information corresponding to each of the V spatial domain filter parameters, namely, amplitude information corresponding to V beams. The second energy information includes capability information corresponding to each of the V spatial domain filter parameters, namely, energy information corresponding to the V beams.

S307: The second device determines effective beams based on the V spatial domain filter parameters.

One spatial domain filter parameter index corresponds to one beam, and in this case, the first device may determine a total of V effective beams.

Optionally, if the first device further reports at least one of second amplitude information and second energy information that correspond to the V spatial domain filter parameter indexes, the second device may further perform selection from the V effective beams based on the at least one of the second amplitude information and the second energy information that correspond to the V spatial domain filter parameter indexes.

In the method 300, in addition to reducing beam training reference signal resource overheads and improving a beam training speed in the method 200, the method S300 can reduce reporting overheads of the first device. In the method 200, the first device needs to report the second indication information once for each time of beam grouping. When the second device groups beams a plurality of times, the second device comprehensively estimates effective beams based on a plurality of pieces of indication information (corresponding to the plurality of times of beam grouping) reported by the first device. In S300, the second device indicates beam grouping information, namely, spatial domain filter parameter indexes corresponding to reference signals, to the first device, and the first device may directly estimate, for reporting, effective beams by locally comprehensively considering measurement results of a plurality of times of beam grouping. Therefore, for the plurality of times of beam grouping, the first device needs to report indication information only once.

The following specifically describes a process of determining a beam in the method 300. The following uses, for description, an example in which the beams are evenly grouped, the reference signal is a CSI-RS, the first device is a terminal device, and the second device is a network device. However, embodiments of this application are not limited thereto.

Step 1: Group beams.

For beam grouping in step 1, refer to exemplified step 1 in the method 200.

Step 2: Configure resources.

The network device configures one 2-port NZP-CSI-RS resource for each beam group in each time of grouping, in other words, one beam group in one time of beam grouping corresponds to one 2-port NZP-CSI-RS resource. If the network device may configure M 2-port NZP-CSI-RS resources for one time of grouping, H*M 2-port NZP-CSI-RS resources are configured for H times of grouping. The H*M 2-port NZP-CSI-RS resources configured by the network device may be periodic, semi-static, or aperiodic. Each 2-port NZP-CSI-RS resource is bound to one beam group in one time of grouping.

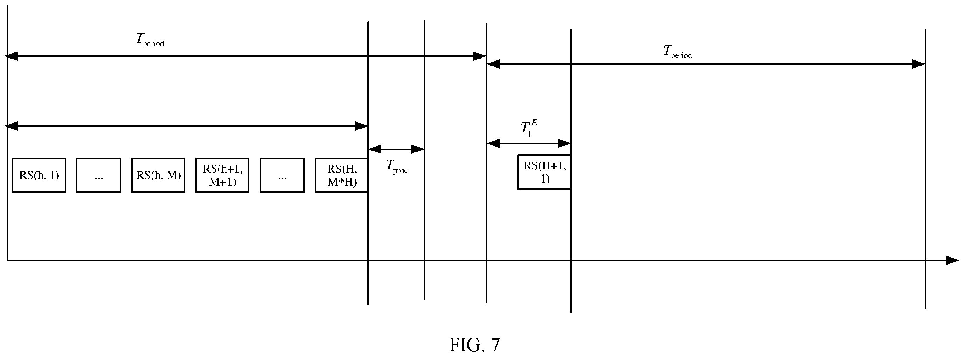

For periodic resources and semi-static resources, the network device needs to configure at least H*M 2-port NZP-CSI-RS resources in one period, and the H*M 2-port NZP-CSI-RS resources need to be in different symbols. In this way, when the network device sends reference signals on the H*M 2-port NZP-CSI-RS resources by using H*M beam groups, the sending can be staggered in time. As shown in FIG. 7, RS(h, 1) represents the first reference signal resource in one period $T_{period}$ in the hth time of grouping, RS(h, M) represents the Mth reference signal resource in one period $T_{period}$ in the hth time of grouping, RS(h+1, M+1) represents the first reference signal resource in one period $T_{period}$ in the (h+1)th time of grouping, and RS(H, M*H) represents the Mth reference signal resource in one period $T_{period}$ in the Hth time of grouping, and RS(H+1, 1) represents the first reference signal resource in the (H+1)th time of grouping. The (H+1)th time of grouping is the first time of reference signal grouping in another period.

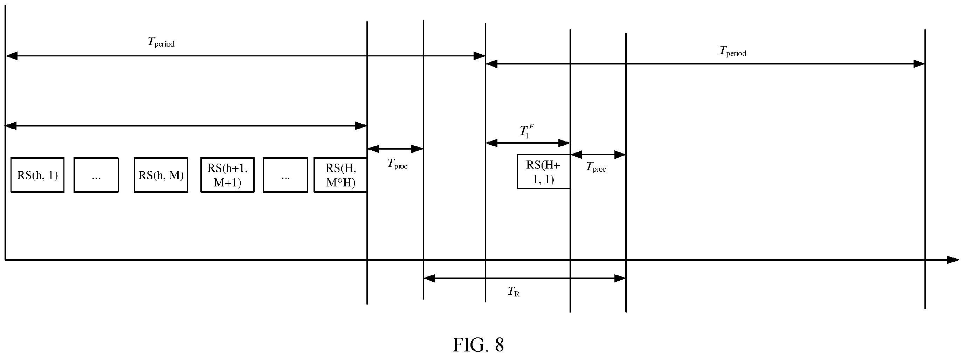

In addition, if a period of the periodic resources configured by the network device is $T_{period}$, an offset (offset) of an end moment of the (H*M)th 2-port NZP-CSI-RS resource (RS(H, M*H) in FIG. 8) in the period relative to the period is $T_{M*H}^{E}$, and an offset (offset) of an end moment of the first 2-port NZP-CSI-RS resource relative to the period is $T_1^{E}$, $T_{period} - T_{M*H}^{E} + T_1^{E} > T_{proc}$ needs to be ensured. $T_{proc}$ is processing time of reference signals in one period after the terminal device receives the reference signals in the period, and $T_{proc}$ may be determined by the terminal device and the network device through signaling exchange.

For aperiodic resources, the network device needs to dynamically configure H*M NZP-CSI-RS resource sets, and 2-port NZP-CSI-RS resources in each NZP-CSI-RS resource set need to be in different symbols. In this way, when the network device sends reference signals on the 2-port NZP-CSI-RS resources by using M beam groups, the sending can be staggered in time.

Step 3: Perform configuration measurement.

The network device sends a CSI-reporting instruction to the terminal device. The CSI-reporting instruction includes information used to indicate a resource that is in the resources configured in step 2 and on which the reference signal is to be measured, and the CSI-reporting instruction is used to instruct the terminal device to report a measurement result of the reference signal. A value of BeamGroupingConfig in a reportQuantity field in the CSI-reporting instruction is sequence(S, R, BeamGrouping), and the BeamGroupingConfig field is a field newly added for this beam training solution in this embodiment of this application. R is a quantity of each group of beam directions, S is a total quantity of beams supported by the network device, and BeamGrouping is used to indicate a grouping result of H times of beam grouping. In a possible implementation, BeamGrouping is a sequence whose length is HS, and values of all elements in the sequence are integers between 0 and S-1. A value of the ((h-1)S+r+(m-1)R)th number in the sequence represents a direction index of the rth direction in the mth group in the hth time of grouping, where h=1, ..., or H, i=1, ..., or R, and m=1, ..., or M. In other words, the sequence whose length is HS may indicate the result of H times of beam grouping performed by the network device. In another possible implementation, BeamGrouping is a random seed value, and the network device and the terminal device disorder a sequence {0, 1, ..., S-1} H times based on the random seed and a same random number generation function, and combines the H sequences into one pseudo-random sequence whose length is HS. The pseudo-random sequence may also indicate the result of H times of beam grouping performed by the network device. If this method is used, the beam grouping performed by the network device in step 1 is also performed based on the pseudo-random sequence. Optionally, the random number generation function is configured by the network device for the terminal device in advance. A nrofReportedBeam field in the reference signal reporting instruction is set to V V may be a quantity of effective beams between the network device and the terminal device that are estimated by the network device.

The network device may indicate, in Manner 1 or Manner 2 in step 3 in the method 200, R codewords corresponding to each reference signal. Optionally, the network device may indicate, to the terminal device by using related signaling, whether the network device uses Manner 1 or Manner 2; or the network device may not indicate, to the terminal device, whether the network device uses Manner 1 or Manner 2, and for the network device and the terminal device, one of the manners is used by default according to a predefined rule. The CSI-reporting may further indicate a manner in which the terminal device reports indication information. The terminal device may periodically, semi-statically, or aperiodically report the indication information.

If the CSI-reporting indicates that the terminal device periodically reports the indication information, the resources configured in step 2 are also periodic, and a period of reporting the indication information by the terminal device and the period of the resources in step 2 are the same and are $T_{period}$. In this way, it can be ensured that the terminal device can report the indication information once after measuring reference signals in one period. A relationship between a reporting moment $T_R$ and the period of the configured resources needs to meet $T_{M*H}^E + T_{proc} < T_R < T_{period}$ or $0 < T_R < T_1^E + T_{proc}$. FIG. 8 shows an optional time range of the reporting moment $T_R$. $T_{M*H}^E + T_{proc} < T_R < T_{period}$ indicates that the terminal device needs to report the measurement result after receiving and processing the last reference signal in one time of grouping and before one period ends. $0 < T_R < T_1^E + T_{proc}$ indicates that the terminal device needs to report the measurement result before receiving the first reference signal in a next period.

If the CSI-reporting instruction indicates that the terminal device semi-statically reports the indication information, the resources configured in step 2 may be periodic or semi-static, and a period of reporting the indication information by the terminal device and the period of the resources in step 2 are the same, in other words, the period is $T_{period}$. In this way, it can be ensured that the terminal device can report the indication information once after measuring reference signals in one period. A relationship between a reporting moment $T_R$ and the period of the configured resources needs to meet $T_{M*H}^E + T_{proc} < T_R < T_{period}$ or $0 < T_R < T_1^E + T_{proc}$.

If the CSI-reporting instruction indicates that the terminal device aperiodically reports the indication information, the resources configured in step 2 may be periodic, semi-static, or aperiodic. The network device needs to send one reporting instruction, and the terminal device reports the indication information once.

Step 4: The network device sends 2-port NZP-CSI-RSs on the resources configured in step 2.

For sending the 2-port NZP-CSI-RSs by the network device in step 4, refer to exemplified step 4 in the method 200.

Step 5: The terminal device measures the 2-port NZP-CSI-RSs in step 4, obtains amplitude and phases of the 2-port reference signals through measurement, normalizes the received reference signals according to the method in step 5 in the method 200, and then estimates gains of beam directions.

For a method for estimating the gains of the beam directions by the terminal device, refer to the method in Case 2 in exemplified step 6 for Option 1 in the method 200.

Step 6: The terminal device reports a measurement result of the reference signal to the network device. The measurement result includes indexes of V beam directions. In a method for selecting V beam directions, V beam directions with largest gains are selected based on the estimated result in step 5 and reported.

Optionally, if the network device indicates, in step 3, the terminal device to report amplitude information or energy information of the beam, the terminal device quantizes amplitude or energy of a corresponding effective beam, and then performs reporting. The energy information may include RSRP information.

It should be noted that, in this embodiment of this application, for ease of understanding, the configuration information sent by the second device to the first device in the method 200 and the method 300 may include one or more parameters. If the second device sends a plurality of parameters to the first device, the plurality of parameters may be sent by using one or more pieces of configuration information. This is not limited in this embodiment of this application.

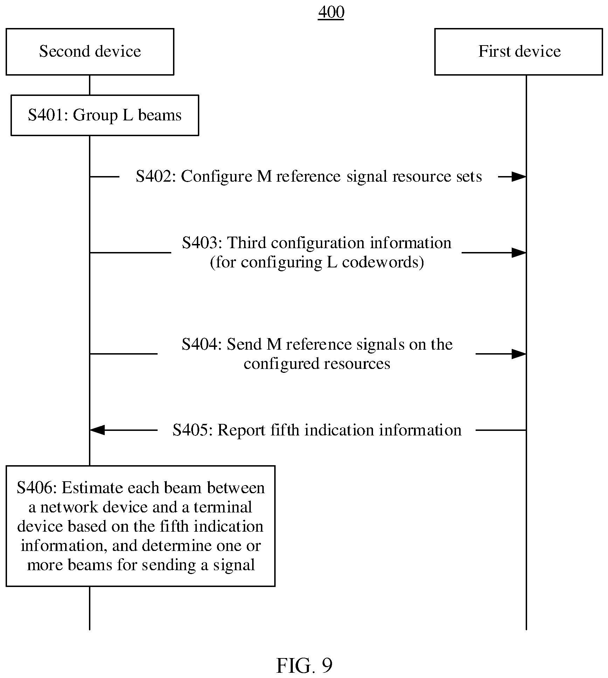

If the configuration information in the method 200 and the method 300 includes measurement results of W reference signals that need to be reported by the first device, V codewords reported by the first device are W codewords, and V=W. In this case, a quantity of measurement results that are of the reference signals and that are reported by the first device is equal to a quantity of reported codewords that is configured by the second device. To be specific, in the foregoing solution, millimeter-wave channel sparsity is used as a basis on a premise that a maximum of one effective beam exists in one beam group. On this premise, the first device can report only one codeword for one reference signal, in other words, a quantity of reported reference signals is equal to a quantity of reported codewords, and W=V When the sent reference signal is a broadband reference signal, even if more than one effective beam exists in one beam group, the first device can distinguish between a plurality of effective beams with different delays in delay domain, and report a plurality of codewords for one reference signal, in other words, V>W, to improve a distinguishing capability and an estimation capability of each effective beam. The following describes the beam training method in this application with reference to an embodiment of a method 400 in FIG. 9.

S401 is the same as S201.

S402: The second device configures one reference signal resource set for each beam group, in other words, configures M reference signal resource sets.

In S402, the second device may configure an index of each of the M reference signal resource sets, a time-frequency resource location of each reference signal resource in each reference signal resource set, an index of a reference signal resource included in each reference signal resource set, and a quantity of ports occupied by the reference signal resources included in each reference signal resource set.

Optionally, each of the M reference signal resource sets occupies a plurality of 2-port subband reference signal resources on different subcarriers, and frequency spacings between the plurality of 2-port subband reference signal resources are the same. The M reference signal resource sets correspond to M broadband 2-port reference signals. One reference signal resource set and a broadband reference signal corresponding to the reference signal resource set may be identified by one reference signal resource set index. One subband reference signal resource and a subband reference signal corresponding to the subband reference signal resource may be identified by one subband reference signal resource index. Each of M broadband reference signals is associated with one beam group in S401. In other words, any two of broadband reference signals, reference signal resource sets, and reference signal resource set indexes, and beam groups are in a one-to-one correspondence. The reference signal in the method 400 is a broadband reference signal by default unless specifically indicated.

In the following descriptions, the reference signal resource set index may also be referred to as an index of a broadband reference signal. The broadband reference signal in the method 400 may be referred to as a reference signal, and the index of the broadband reference signal may be referred to as an "index of the reference signal". The index of the reference signal is used to indicate a broadband reference signal sequence and a time-frequency resource location corresponding to the reference signal sequence.

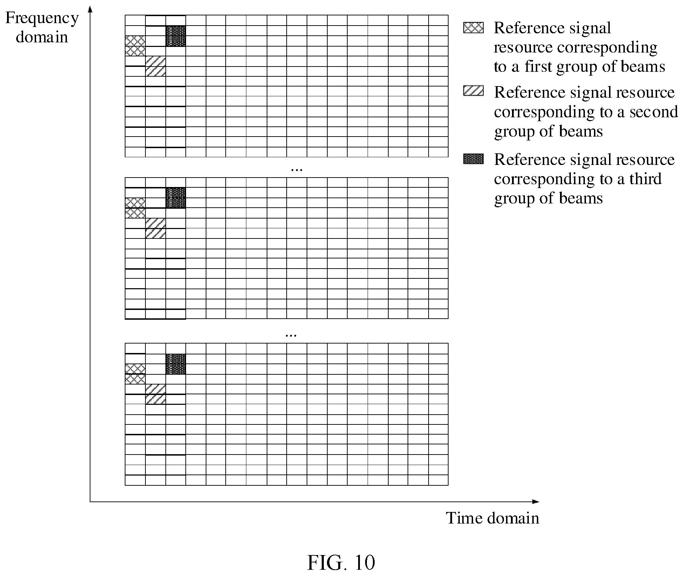

For example, FIG. 10 shows three reference signal resource sets corresponding to three beam groups. One reference signal resource set corresponding to each beam group includes three 2-port subband resources, and a frequency domain spacing between any two 2-port subband resources adjacent in frequency domain is the same.

Optionally, a quantity of beams corresponding to each of the M reference signals is greater than 2. In this case, the terminal device may measure one reference signal to determine measurement results of a plurality of beams, so that resource overheads can be reduced.

Optionally, in S402, the second device may configure periodic, semi-static, or aperiodic reference signal resource sets for a plurality of times of beam grouping in S401.

Optionally, the second device may configure, for a first device in a broadcast, multicast, or unicast manner, resources occupied by the beams obtained through grouping.

S403: The second device sends third configuration information used for beam training to the first device. The third configuration information is used to configure L codewords.

There is an association relationship between the L codewords and the M reference signals.

Optionally, each of the M reference signals is associated with at least one of the L codewords. The mth reference signal in the M reference signals is associated with $R_m$ codewords in the L codewords.

Optionally, at least one of the M reference signals is associated with at least two of the L codewords. For example, when codewords associated with two reference signals are unequal, one reference signal is associated with two of the L codewords, and the other reference signal is associated with one of the L codewords. For another example, when codewords associated with the reference signals are equal, each reference signal is associated with two or more of the L codewords.

Optionally, the L codewords configured by the second device by using the third configuration information are in a one-to-one correspondence with the L beams in S401, or the L codewords are in a one-to-one correspondence with L spatial domain filter parameters. Therefore, the mth reference signal in the M reference signals is further associated with $R_m$ spatial domain filter parameters (beams) in the L spatial domain filter parameters, and one codeword associated with the mth reference signal is associated with one beam in one beam group associated with the mth reference signal. The first device receives the third configuration information used to configure the codeword, and may indicate an effective beam by reporting the codeword.

There may be three cases for a method for configuring the L codewords and the association relationship between the L codewords and the M reference signals. The three cases are the same as Case 1, Case 2, and Case 3 in S203.

The third configuration information may be further used to configure, as V, a quantity of codeword or codeword indexes indicated by indication information sent by the first device.

For codeword configuration methods in different cases, the third configuration information is used to configure the first device to report first indication information by using different options.

The different reporting options are the same as the reporting options 1 and 2 in S203.

Optionally, the third configuration information in Option 1 and Option 2 may be further used to configure the first device to report at least one of amplitude information and energy information of V codewords.

S404 is the same as S204.

S405: The first device measures the reference signal sent by the second device in S404, and sends fifth indication information to the second device.

Optionally, the first device performs normalization processing on the received reference signals based on a signal agreed on between the second device and the first device. A specific step is the same as the normalization method in S205.

For Option 1 in S403, the first indication information reported by the first device indicates indexes of W reference signals and codewords or indexes of the codewords associated with all of the W reference signals. The wth reference signal in the W reference signals is associated with $v_w$ codewords, the W reference signals are reference signals in the M reference signals, $v_w$ is a positive integer, and $\sum_{w=1}^{W} v_w = V$ .

For example, the first device first selects W reference signals from the M reference signals as reference signals that need to be reported. In a method for selecting the W reference signals, W reference signals with relatively large energy or relatively large amplitude in the M reference signals are selected. Then $v_w$ codewords are determined for each reference signal based on measurement results on two ports of the W reference signals.

Optionally, a method for determining the codeword is Method 1, and specifically includes two steps: (1) For a reference signal that needs to be reported, the first device separately sorts the 2-port broadband reference signal into two frequency domain signal sequences on ports based on a frequency domain order, and then converts the two sequences to time domain through discrete fourier transform or inverse discrete fourier transform to obtain 2-port time domain signal sequences. (2) $v_w$ indexes are selected from the 2-port time domain sequences. In a method for determining the $v_w$ indexes, weighted averaging may be performed on amplitude (or energy) of a first-port time domain signal and amplitude (or energy) of a second-port time domain signal to obtain a third sequence, and then $v_w$ locations with largest element values in the third sequence may be selected as the $v_w$ indexes. (3) Phase differences of the 2-port time domain signals at the $v_w$ locations are calculated, and then $v_w$ codewords that are in $R_m$ codewords associated with the reference signal and that have smallest differences from the $v_w$ phase differences are selected. A method for determining indexes of the $v_w$ codewords is the same as that in Option 1 in S205.

Optionally, in Method 1, the first device may report $v_w$ pieces of location index information for each of the reported W reference signals.

Another method for determining the codeword is Method 2. Specific steps are as follows: (1) is the same as (1) in the first method. (2) For each location index of the 2-port time domain sequence, one codeword may be determined based on a 2-port phase difference according to (3) in Method 1. The codeword actually corresponds to one beam. Energy of the 2-port time domain sequence at the location index (for example, weighted average energy of the 2-port sequence at the location) is a part of energy collected in a beam direction corresponding to the codeword. All the location indexes of the 2-port time domain sequence are traversed to estimate energy collected in each beam direction corresponding to each codeword, and then $v_w$ codewords corresponding to $v_w$ beams with largest energy gains are determined as codewords that need to be reported. A method for determining indexes of the $v_w$ codewords is the same as that in Option 1 in S205.

For Option 2 in S403, the fifth indication information reported by the first device includes reporting V codewords or V codeword indexes. A process in which the first device determines the V codewords is the same as that in Option 1. A method for determining the V codeword indexes is the same as that in Option 2 in S205.

Optionally, the first device reports sixth indication information. The sixth indication information indicates at least one of first amplitude information and first energy information of the V codewords. The at least one of the first amplitude information and the first energy information is a quantized result. A specific quantization manner and specific quantization precision may be predefined or may be configured by the second device.

Optionally, the third configuration information in S403 may be the first configuration information in the method 200, and the fifth indication information in S405 may be the first indication information in the method 200.

S406 is the same as S206.

In the foregoing method 400, the beam training method is extended to a broadband reference signal scenario. When one beam group may include one or more effective beams, a plurality of effective beams with different delays are distinguished from each other by converting the broadband reference signal to delay domain, so that a detection and estimation capability of the effective beam can be improved.

The following specifically describes a process of determining a beam in the method 400. The following uses, for description, an example in which the beams are evenly grouped, the reference signal is an NZP-CSI-RS, the first device is a terminal device, and the second device is a network device. However, embodiments of this application are not limited thereto.

Step 1: Group beams.

Step 1 is the same as step 1 in the method 200.

Step 2: Configure resources.

The network device configures a plurality of 2-port NZP-CSI-RS resources for each beam group in each time of grouping. In other words, one beam group in one time of beam grouping corresponds to a plurality of 2-port NZP-CSI-RS resources. The plurality of 2-port NZP-CSI-RS resources have a same time domain location and a same frequency domain spacing. In other words, a plurality of 2-port NZP-CSI-RS resources corresponding to one beam group are resources with an equal subcarrier spacing at a same time. The plurality of 2-port NZP-CSI-RS resources constitute one 2-port NZP-CSI-RS resource set. The network device may send a plurality of subband reference signals on each 2-port NZP-CSI-RS resource set, to form one broadband reference signal. In the following descriptions, a reference signal is a simple form of a broadband reference signal unless specifically noted. For example, one beam group corresponds to three 2-port NZP-CSI-RS resources, the three 2-port NZP-CSI-RS resources constitute one 2-port NZP-CSI-RS resource set, and three 2-port subband reference signals may be sent on the three 2-port NZP-CSI-RS resources, to form one broadband reference signal. The network device may configure 3*M 2-port NZP-CSI-RS resources for one time of grouping, and configure 3*H*M 2-port NZP-CSI-RS resources for H times of grouping. The 3*H*M 2-port NZP-CSI-RS resources configured by the network device may be periodic, semi-static, or aperiodic.

The network device may indicate each 2-port NZP-CSI-RS resource by using a resource index. If the network device configures a total of U 2-port NZP-CSI-RS resources for a plurality of beam groups, 1, ..., u, ..., and U may be used to indicate indexes of the U 2-port NZP-CSI-RS resources, or certainly, 0, 1, ..., u, ..., and U-1 may be used to indicate indexes of the U 2-port NZP-CSI-RS resources.

The network device may indicate each 2-port NZP-CSI-RS resource set by using a resource set index. If the network device configures a total of M 2-port NZP-CSI-RS resource sets for a plurality of beam groups, 1, ..., m, ..., and M may be used to indicate indexes of the M 2-port NZP-CSI-RS resource sets, or certainly, 0, 1, ..., and M-1 may be used to indicate indexes of the M 2-port NZP-CSI-RS resource sets.

For periodic, semi-static, or aperiodic resources, refer to the descriptions of step 2 in the method 200.

Step 3: Perform configuration measurement.

The network device sends a CSI-reporting instruction to the terminal device. The CSI-reporting instruction includes information used to indicate a resource that is configured in step 2 and on which the terminal device is to measure a reference signal. A value of a nrofBeamEachRS field in the CSI-reporting instruction is R. The nrofBeamEachRS field is a field newly added for this beam training solution in this embodiment of this application, and R is a quantity of each group of beam directions in step 1. The network device may indicate, in two manners, at least one codeword corresponding to each reference signal. For a method for configuring at least one codeword for each reference signal, refer to Manner 1 or Manner 2 in exemplified step 3 in the method 200.

Optionally, the network device may indicate, to the terminal device by using related signaling, whether the network device uses Manner 1 or Manner 2 to configure the codeword; or the network device may not indicate, to the terminal device, whether the network device uses Manner 1 or Manner 2 to configure the codeword, and for the network device and the terminal device, one of Manner 1 and Manner 2 is used by default according to a predefined rule.

A nrofReportedRS field in the reference signal reporting instruction is set to W, in other words, indicates that the terminal needs to report measurement results of W reference signals in M reference signals.

Optionally, the network device may configure, in the CSI-reporting instruction, the following specific content reported by the terminal device for each reference signal.

Option 1: When the codeword is configured in Manner 1 or Manner 2 or is not configured in the CSI-reporting, the network device may configure the terminal device to report a resource set index corresponding to a reference signal and quantized phase values that are of two ports and that are obtained on 2-port resources in a reference signal resource set through measurement. A phase quantization manner may be converting a phase into a phase in $[0, 2\pi)$ and then performing X-bit even quantization on the phase.

Optionally, the measurement result that is of the reference signal and that the network device indicates the terminal device to report may further include quantized amplitude values that are of two ports and that are obtained on 2-port resources in a reference signal resource set through measurement.

Option 2: When the codeword is configured in Manner 1 or Manner 2 in the foregoing CSI-reporting, the network device may configure a nrofDelayTaps field as E by using the CSI-reporting instruction. In this option, for a reference signal that needs to be reported, the terminal device needs to separately sort the received 2-port reference signal into two frequency domain signal sequences based on a frequency domain order, and then convert the two sequences to time domain through discrete fourier transform to obtain 2-port time domain signal sequences. The terminal device needs to report a resource set index corresponding to the reference signal and quantized phase difference values of the 2-port time domain signals at E location indexes.

Optionally, the measurement result that is of the reference signal and that the network device indicates the terminal device to report may further include the E location indexes of the 2-port time domain signals.

Optionally, the measurement result that is of the reference signal and that the network device indicates the terminal device to report may further include quantized amplitude values of the 2-port time domain signals at the E location indexes.

Option 3: When the codeword is configured in Manner 1 or Manner 2 in the foregoing CSI-reporting, the network device may configure a nrofDelayTaps field as E by using the CSI-reporting instruction. In this option, the terminal device needs to separately sort the received 2-port reference signal into two frequency domain signal sequences based on a frequency domain order, and then convert the two sequences to time domain through discrete fourier transform to obtain 2-port time domain signal sequences. The terminal device needs to report a reference signal resource set index corresponding to the reference signal and indexes of codewords corresponding to the 2-port time domain signals at E location indexes.

Optionally, the measurement result that is of the reference signal and that the network device indicates the terminal device to report may further include the E location indexes of the 2-port time domain signals.

Optionally, the measurement result that is of the reference signal and that the network device indicates the terminal device to report may further include quantized amplitude values of the 2-port time domain signals at the E location indexes.

Option 4: When the codeword is configured in Manner 1 or Manner 2 in the foregoing CSI-reporting, the network device may configure a nrofBeams field as K by using the CSI-reporting instruction. In this option, the network device configures the terminal device to report a reference signal resource set index corresponding to a reference signal and K codeword indexes corresponding to the reference signal.

Optionally, the measurement result that is of the reference signal and that the network device indicates the terminal device to report may further include energy corresponding to the K codewords.

Optionally, in the manner of jointly using the reference signal resource set and the codeword index for indication in Option 3 and Option 4, the codeword index may be used for indication. In this case, the network device may configure the terminal device to report the codeword index without reporting the reference signal resource set index. In this case, the corresponding option is applicable to configuration that is performed in Manner 2 in the foregoing CSI-reporting and that is of at least one codeword associated with each reference signal.

The CSI-reporting may further indicate a manner in which the terminal device reports the measurement result of the reference signal, and the terminal device may periodically, semi-statically, or aperiodically report the measurement result of the reference signal. For specific details, refer to exemplified step 3 in the method 200.

Step 4 is the same as step 4 in the method 200.

Step 5: The terminal device measures the reference signal sent in step 4, and reports a measurement result to the network device.

For M reference signals in the hth time of grouping, the terminal device measures the M reference signals to obtain a measurement result $\left\{y_1^{h,m,f}\right\}_{m,f}$ and $\left\{y_2^{h,m,f}\right\}_{m,f}$ of each reference signal. $y_1^{h,m,f}$ and $y_2^{h,m,f}$ are separately obtained normalized results, of the first port and the second port, of the fth subband reference signal included in one broadband reference signal of the mth beam group in the hth time of grouping, and both are complex numbers. A value of f is 1, ..., or F, and F is a quantity of 2-port subband reference signals included in one broadband reference signal.

For one time of grouping, the terminal device first selects W reference signals from all of received M reference signals as reference signal groups that need to be reported. In a possible implementation, W reference signals with maximum $\left(\alpha_1 \sum_{f=1}^{F}\left|y_1^{h,m,f}\right|^2 + \alpha_2 \sum_{f=1}^{F}\left|y_2^{h,m,f}\right|^2\right)$ are selected. In another possible implementation, W reference signals with maximum $\sum_{f=1}^{F}\left|\alpha_1 y_1^{h,m,f} + \alpha_2 y_2^{h,m,f}\right|^2$ are selected. Weighted averaging coefficients $\alpha_1$ and $\alpha_2$ are configured by the network device in advance, or are default values by default.

For a reference signal that needs to be reported, it may be assumed that the reference signal corresponds to the mth beam group in the hth time of grouping. A value of h is 1, ..., or H, and a value of m is 1, ..., or M. The terminal device reports a measurement result of the reference signal based on the configuration options of the network device in step 3.

For Option 1 in step 3, the terminal device reports a reference resource set index corresponding to the reference signal, and reports corresponding $\hat{\theta}_1^{h,m,f}$ and $\hat{\theta}_2^{h,m,f}$ for each 2-port NZP-CSI-RS in a case of the reference signal. $\hat{\theta}_1^{h,m,f}$ represents a quantized phase value of $y_1^{h,m,f}$ in [0, 2π), and $\hat{\theta}_2^{h,m,f}$ represents a quantized phase of $y_2^{h,m,f}$ in [0, 2π).

Optionally, if the network device configures, in step 3, that the terminal device needs to report amplitude information of a reference signal measurement value, the terminal device further needs to report quantized amplitude values $\hat{y}_1^{h,m,f}$ and $\hat{y}_2^{h,m,f}$ of $y_1^{h,m,f}$ and $y_2^{h,m,f}$.

For Option 2 in step 3, the terminal device separately performs discrete fourier transform on frequency domain sequences $\left\{y_1^{h,m,f}\right\}_{f=1\ to\ F}$ and $\left\{y_2^{h,m,f}\right\}_{f=1\ to\ F}$ to obtain time domain sequences $\left\{d_1^{h,m,f}\right\}_{f=1\ to\ F}$ and $\left\{d_2^{h,m,f}\right\}_{f=1\ to\ F}$. Then E location indexes are selected. In a possible method for selecting the E location indexes, E indexes f with maximum $\left(\alpha_1\left|d_1^{h,m,f}\right| + \alpha_2\left|d_1^{h,m,f}\right|\right)$ may be selected from 1 to F. In another possible method, E indexes f with maximum $\left(\alpha_1\left|d_1^{h,m,f}\right|^2 + \alpha_2\left|d_2^{h,m,f}\right|^2\right)$ are selected from 1 to F. In this case, the terminal device reports a resource set index corresponding to the reference signal and quantized phase difference values of $\left\{d_1^{h,m,f}\right\}_{f=1\ to\ F}$ and $\left\{d_2^{h,m,f}\right\}_{f=1\ to\ F}$ at the E location indexes.

Optionally, if the network device configures, in step 3, that the terminal device needs to report E location indexes, the terminal device further needs to report the foregoing selected E location indexes.

Optionally, if the network device configures, in step 3, that the terminal device needs to report amplitude information of a reference signal measurement value, the terminal device further needs to report quantized amplitude values of $\left\{d_1^{h,m,f}\right\}_{f=1\ to\ F}$ and $\left\{d_2^{h,m,f}\right\}_{f=1\ to\ F}$ at the E location indexes.

For Option 3 in step 3, similar to Option 2, after time domain sequences are obtained through discrete fourier transform, and E location indexes are determined, the terminal device reports a resource set index corresponding to the reference signal and indexes of codewords corresponding to $\left\{d_1^{h,m,f}\right\}_{f=1\ to\ F}$ and $\left\{d_1^{h,m,f}\right\}_{f=1\ to\ F}$ at the E location indexes. The corresponding codewords may be determined based on phase differences of the two sequences at the E location indexes and at least one codeword associated with the reference signal. For a method for determining the codeword and the codeword index based on the phase difference, refer to Option 2 in exemplified step 5 in the method 200.

Optionally, if the network device configures, in step 3, that the terminal device needs to report E location indexes, the terminal device further needs to report the foregoing selected E location indexes.

Optionally, if the network device configures, in step 3, that the terminal device needs to report amplitude information of a reference signal measurement value, the terminal device further needs to report quantized amplitude values of $\left\{d_1^{h,m,f}\right\}_{f=1\ to\ F}$ and $\left\{d_2^{h,m,f}\right\}_{f=1\ to\ F}$ at the E location indexes.

For Option 4 in step 3, the terminal device needs to report a resource set index corresponding to the reference signal and indexes of K codewords in at least one codeword bound to the reference signal. A total of R codewords are associated with the reference signal, and R is a quantity of beams in one beam group bound to the reference signal. Similar to Option 2, time domain sequences $\left\{d_1^{h,m,f}\right\}_{f=1\ to\ F}$ and $\left\{d_2^{h,m,f}\right\}_{f=1\ to\ F}$ are obtained through discrete fourier transform. For each location index f, referring to Option 3 in S405, one codeword may be determined based on a phase difference between $d_1^{h,m,f}$ and $d_2^{h,m,f}$ and the at least one codeword associated with the reference signal. An index of the codeword in the at least one codeword associated with the reference signal is denoted as r(f). Then the K codewords that need to be reported are selected based on the following algorithm:

Initialization: Initialize P to an all-zero vector whose length is R

Input:

$$\left\{d_1^{h,m,f}\right\}_{f=1 \, to \, F}, \quad \left\{d_2^{h,m,f}\right\}_{f=1 \, to \, F}, \text{ and } \left\{\mathrm{r}(f)\right\}_{f=1 \, to \, F}$$

For f=1 to F

$$P(\mathrm{r}(f))=P(\mathrm{r}(f))+\alpha_1\left|d_1^{h,m,f}\right|^2 + \alpha_2\left|d_2^{h,m,f}\right|^2$$

End

Output: Output K largest location indexes in P elements and use the K location indexes as indexes of the K codewords that need to be reported, where

$\alpha_1$ and $\alpha_2$ are energy weight values of two ports, and may be set by default or may be configured by the network device.

Optionally, if the network device configures, in step 3, that the terminal device needs to report energy information of a corresponding codeword, the terminal device further needs to report element values of the vector P in a case of the K indexes.

Optionally, for Option 3 and Option 4, if the network device configures the terminal device to report the codeword index but not report the reference signal resource set index, the terminal device may report the codeword index without reporting the reference signal resource set index. A process of determining the codeword is the same as those in Option 3 and Option 4, and a process of determining the codeword index is the same as that in Option 3 in step 5 in the method 200.

Step 6: The network device may determine one or more beams. Two or more beams in the one or more beams may belong to a same beam group obtained through grouping in step 1.

For Option 1 in step 5, the terminal device reports W reference signal resource set indexes and quantized phase values of 2-port reference signals in each reference signal resource set. In this case, the network device determines, based on a reported 2-port phase difference of each reference signal, a codeword corresponding to the reference signal, to further determine an effective beam direction. For a method for determining the effective beam direction, refer to Case 1 corresponding to the reporting option 1 in exemplified step 6 in the method 200. If the terminal device further reports a quantized amplitude value of each 2-port reference signal, for one reference signal, the network device may estimate a gain of each beam direction with reference to Option 4 in step 5. The network device may obtain gain estimates of all the beam directions by repeatedly performing the method for all the reference signals, and then further select a transmission beam.

For Option 2 in step 3, the terminal device reports W reference signal resource set indexes and quantized phase difference values of corresponding 2-port time domain signals at E location indexes. In this case, the network device determines, based on a reported 2-port phase difference of each reference signal, a codeword corresponding to the reference signal, to further determine an effective beam direction. For a method for determining the effective beam direction, refer to Case 1 for Option 1 in exemplified step 6 in the method 200. If the terminal device further reports quantized amplitude values of each 2-port time domain signal at the E location indexes, for one reference signal, the network device may estimate a gain of each beam direction with reference to Option 4 in step 5. The network device may obtain gain estimates of all the beam directions by repeatedly performing the method for all the reference signals, and then further select a transmission beam.

For Option 3 in step 3, the terminal device reports W reference signal resource set indexes and codeword indexes of corresponding 2-port time domain signals at E location indexes. In this case, the network device may determine an effective beam direction based on a codeword. For a method for determining the effective beam direction, refer to Case 1 for Option 2 in exemplified step 6 in the method 200. If the terminal device further reports quantized amplitude values of each 2-port time domain signal at the E location indexes, for one reference signal, the network device may estimate a gain of each beam direction with reference to Option 4 in step 5. The network device may obtain gain estimates of all the beam directions by repeatedly performing the method for all the reference signals, and then further select a transmission beam.

For Option 4 in step 3, the terminal device reports W reference signal resource set indexes and K codeword indexes of each corresponding reference signal. In this case, the network device may determine an effective beam direction based on a codeword. For a method for determining the effective beam direction, refer to Case 1 for Option 2 in exemplified step 6 in the method 200. If the terminal device further reports energy information corresponding to each codeword, the network device may obtain a gain estimate of each beam direction, and then further select a transmission beam.

Compared with the method 200, in the method 400, a plurality of beams in one beam group can be distinguished from each other by introducing additional delay domain information, so that beam training accuracy can be improved while beam training time is reduced.

It should be noted that in this embodiment of this application, indexes of a parameter may start from 0 or may start from 1. For example, indexes of $R_m$ codewords are 0,1,2,...,$R_m$ -1, or may be 1,2,...,$R_m$. Indexes of M reference signals are 0, 1, 2, ..., and M-1, or may be 1, 2, ..., and M. This is not limited in this embodiment of this application.

It should also be noted that, in this embodiment of this application, that each of the M reference signals is associated with at least one of the L codewords may mean that one of the M reference signals is associated with one or more codewords. In this embodiment of this application, that at least one of the M reference signals is associated with at least two of the L codewords may mean that the M reference signals include one or more reference signals associated with two or more codewords, and may also include a reference signal associated with one codeword.

The embodiments described in this specification may be independent solutions, or may be combined based on internal logic. These solutions fall within the protection scope of this application.

It may be understood that methods and operations implemented by the first device or the terminal device in the foregoing method embodiments may be alternatively implemented by a component (for example, a chip or a circuit) that may be used for the first device or the terminal device, and methods and operations implemented by the second device or the network device in the foregoing method embodiments may be alternatively implemented by a component (for example, a chip or a circuit) that may be used for the second device or the network device.

The foregoing describes the method embodiments provided in this application, and the following describes apparatus embodiments provided in this application. It should be understood that descriptions of the apparatus embodiments correspond to the descriptions of the method embodiments, and therefore, for content that is not described in detail, refer to the foregoing method embodiments. For simplicity, details are not described herein again.

The solutions provided in embodiments of this application are mainly described above from a perspective of interaction between the devices. It may be understood that, to implement the foregoing functions, the devices such as the first device, the second device, the terminal device, or the network device include a corresponding hardware structure and/or software module used to perform each function. A person skilled in the art should be aware that with reference to units, algorithms, and steps in the examples described in the embodiments disclosed in this specification, this application can be implemented in a form of hardware or a combination of hardware and computer software. Whether a function is performed by hardware or hardware driven by computer software depends on a particular application and a design constraint of the technical solutions. A person skilled in the art may use different methods to implement the described functions for each particular application, but it should not be considered that the implementation goes beyond the protection scope of this application.

In embodiments of this application, the first device or the second device may be divided into function modules based on the foregoing method examples. For example, the function modules may be obtained through division based on corresponding functions, or two or more functions may be integrated into one processing module. The integrated module may be implemented in a form of hardware, or may be implemented in a form of a software functional module. It should be noted that, in embodiments of this application, division into the modules is an example and is merely logical function division, and may be other division in an actual implementation. The following uses, for description, an example in which function modules are obtained through division based on corresponding functions.

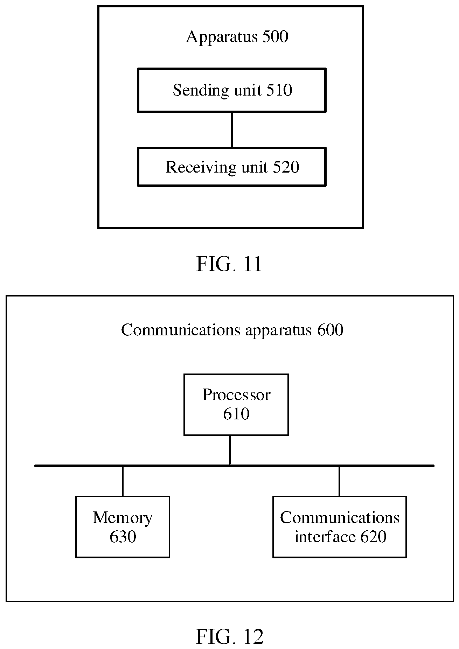

FIG. 11 is a schematic block diagram of an apparatus 500 according to an embodiment of this application. The apparatus 500 includes a sending unit 510 and a receiving unit 520. The sending unit 510 may send a signal to the outside, and the receiving unit 510 may receive a signal from the outside. The sending unit 510 and the receiving unit 520 may also be referred to as communications interfaces or communications units.

The apparatus 500 may be configured to perform actions performed by the first device or the second device in the foregoing method embodiments. In this case, the apparatus 500 may be referred to as a first device or a second device. The sending unit 510 is configured to perform sending related operations on a side of the first device or the second device in the foregoing method embodiments, and the receiving unit 520 is configured to perform reception related operations on a side of the first device or the second device in the foregoing method embodiments.

In a possible implementation, the apparatus 500 is configured to implement operations performed by the first device in the foregoing method embodiments. For example, the receiving unit 520 is configured to receive first configuration information used for beam training. The first configuration information is used to configure L codewords associated with M reference signals, each of the M reference signals is associated with at least one of the L codewords, and M and L are positive integers. The sending unit 510 is configured to send first indication information. The first indication information indicates V codewords in the L codewords, V is a positive integer less than or equal to L, and the first indication information is determined by the apparatus 500 based on measurement of the M reference signals.

In a possible implementation, the apparatus 500 is configured to implement operations performed by the first device in the foregoing method embodiments. For example, the receiving unit 520 is configured to receive second configuration information used for beam training. The second configuration information is used to configure L spatial domain filter parameters and L codewords that are associated with M reference signals, each of the M reference signals is associated with at least one of the L codewords and at least one of the L spatial domain filter parameters, and M and L are positive integers. The sending unit 510 is configured to send second indication information. The second indication information indicates V spatial domain filter parameters in the L spatial domain filter parameters, V is a positive integer less than or equal to L, and the second indication information is determined based on measurement performed by the apparatus 500 on the M reference signals, the L codewords, and the L spatial domain filter parameters.

In a possible implementation, the apparatus 500 is configured to implement operations performed by the second device in the foregoing method embodiments. For example, the sending unit 510 is configured to send first configuration information used for beam training. The first configuration information is used to configure L codewords associated with M reference signals, each of the M reference signals is associated with at least one of the L codewords, and M and L are positive integers. The receiving unit 520 is configured to receive first indication information. The first indication information indicates V codewords in the L codewords, and V is a positive integer less than or equal to L.

In a possible implementation, the apparatus 500 is configured to implement operations performed by the second device in the foregoing method embodiments. For example, the sending unit 510 is configured to send second configuration information used for beam training. The second configuration information is used to configure L spatial domain filter parameters and L codewords that are associated with M reference signals, each of the M reference signals is associated with at least one of the L codewords and at least one of the L spatial domain filter parameters, and M and L are positive integers. The receiving unit 520 is configured to receive second indication information. The second indication information indicates V spatial domain filter parameters in the L spatial domain filter parameters, and V is a positive integer less than or equal to L.

The apparatus 500 in the foregoing solutions has functions of implementing corresponding steps performed by the first device or the second device in the foregoing methods, and the functions may be implemented by hardware or software, or may be implemented by hardware executing corresponding software. The hardware or the software includes one or more modules corresponding to the foregoing functions. For example, the sending unit may be replaced with a communications interface, the receiving unit may be replaced with a communications interface, and another unit such as a determining unit may be replaced with a processor, to separately perform reception/transmission operations and related processing operations in the method embodiments. In this embodiment of this application, a communications interface of an apparatus is used by the apparatus to communicate with another device. For example, the communications interface may be a transmitter, a receiver, a transceiver, a circuit, a bus, a module, a pin, or another type of communications interface. This is not limited in this embodiment of this application.

In a specific implementation process, the processor may be configured to perform, for example, baseband related processing, and the communications interface may be configured to perform, for example, information exchange. The foregoing components may be separately disposed on chips that are independent of each other, or at least some or all of the components may be disposed on a same chip. For example, the processor may be further divided into an analog baseband processor and a digital baseband processor. The analog baseband processor and the communications interface may be integrated into a same chip, and the digital baseband processor may be disposed on an independent chip. With continuous development of integrated circuit technologies, more and more components may be integrated on a same chip. For example, the digital baseband processor may be integrated on a same chip with a plurality of application processors (for example, but not limited to, a graphics processor and a multimedia processor). Such a chip may be referred to as a system on chip (system on chip, SOC). Whether components are independently disposed on different chips or are integrated and disposed on one or more chips usually depends on specific requirements of a product design. Embodiments of this application impose no limitation on specific implementations of the foregoing components.

It may be understood that the processor in the foregoing embodiments may separately implement, by executing program instructions by using a hardware platform with a processor and a communications interface, functions involved in any design of the processor in the foregoing embodiments of this application. Based on this, as shown in FIG. 12, an embodiment of this application provides a schematic block diagram of an apparatus 600. The apparatus 600 includes a processor 610, a communications interface 620, and a memory 630. The processor 610, the communications interface 620, and the memory 630 are coupled to communicate with each other, the memory 630 is configured to store instructions, and the processor 610 is configured to execute the instructions stored in the memory 630, to control the communications interface 620 to send a signal and/or receive a signal. The coupling in this embodiment of this application is indirect coupling or a communications connection between apparatuses, units, or modules for information exchange between the apparatuses, the units, or the modules, and may be in electrical, mechanical, or other forms.

In a possible implementation, if the apparatus 600 is a first device, the processor 610 is configured to control the communications interface 620 to receive first configuration information used for beam training. The first configuration information is used to configure L codewords associated with M reference signals, each of the M reference signals is associated with at least one of the L codewords, and M and L are positive integers. The processor 610 is further configured to control the communications interface 620 to send first indication information. The first indication information indicates V codewords in the L codewords, V is a positive integer less than or equal to L, and the first indication information is determined by the apparatus 600 based on measurement of the M reference signals. The communications interface 620 is configured to receive the first configuration information and send the first indication information under control of the processor 610.

In a possible implementation, if the apparatus 600 is a first device, the processor 610 is configured to control the communications interface 620 to receive second configuration information used for beam training. The second configuration information is used to configure L spatial domain filter parameters and L codewords that are associated with M reference signals, each of the M reference signals is associated with at least one of the L codewords and at least one of the L spatial domain filter parameters, and M and L are positive integers. The processor 610 is further configured to control the communications interface 620 to send second indication information. The second indication information indicates V spatial domain filter parameters in the L spatial domain filter parameters, V is a positive integer less than or equal to L, and the second indication information is determined based on measurement performed by the apparatus 600 on the M reference signals, the L codewords, and the L spatial domain filter parameters. The communications interface 620 is configured to receive the second configuration information and send the second indication information under control of the processor 610.

In a possible implementation, if the apparatus 600 is a second device, the processor 610 is configured to control the communications interface 620 to send first configuration information used for beam training. The first configuration information is used to configure L codewords associated with M reference signals, each of the M reference signals is associated with at least one of the L codewords, and M and L are positive integers. The processor 610 is further configured to control the communications interface 620 to receive first indication information. The first indication information indicates V codewords in the L codewords, V is a positive integer less than or equal to L, and the first indication information is determined by a first device based on measurement of the M reference signals.

In a possible implementation, if the apparatus 600 is a second device, the processor 610 is configured to control the communications interface 620 to send second configuration information used for beam training. The second configuration information is used to configure L spatial domain filter parameters and L codewords that are associated with M reference signals, each of the M reference signals is associated with at least one of the L codewords and at least one of the L spatial domain filter parameters, and M and L are positive integers. The processor 610 is further configured to control the communications interface 620 to receive second indication information. The second indication information indicates V spatial domain filter parameters in the L spatial domain filter parameters, V is a positive integer less than or equal to L, and the second indication information is determined based on measurement performed by a first device on the M reference signals, the L codewords, and the L spatial domain filter parameters. The communications interface 620 is configured to send the second configuration information and receive the second indication information under control of the processor 610.

It should be understood that the apparatus 500 in FIG. 11 in embodiments of this application may be implemented by using the apparatus 600 in FIG. 12, and may be configured to perform steps and/or procedures corresponding to the first device and the second device in the foregoing method embodiments.

It may be understood that the methods, procedures, operations, or steps involved in the various designs described in embodiments of this application can be implemented in a one-to-one correspondence manner by using computer software, electronic hardware, or a combination of computer software and electronic hardware. Whether these functions are performed by using hardware or software depends on a specific application and a design constraint of the technical solution. For example, considering good versatility, low costs, decoupling of software and hardware, and the like, program instructions may be executed for implementation. For another example, considering system performance, reliability, and the like, a dedicated circuit may be used for implementation. A person of ordinary skill can implement the described functions by using different methods for each particular application. This is not limited herein.

Based on the method provided in embodiments of this application, this application further provides a computer program product. The computer program product includes computer program code, and when the computer program code runs on a computer, the computer performs the method in the foregoing embodiments. Embodiments of this application may also be combined with each other.

Based on the method provided in embodiments of this application, this application further provides a computer-readable medium. The computer-readable medium stores program code, and when the program code runs on a computer, the computer performs the method in the foregoing embodiments.

In embodiments of this application, it should be noted that the foregoing method embodiments in embodiments of this application may be applied to a processor or implemented by a processor. The processor may be an integrated circuit chip and has a signal processing capability. In an implementation process, steps in the foregoing method embodiments may be implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component. The processor may implement or perform the methods, steps, and logical block diagrams that are disclosed in embodiments of this application. The general-purpose processor may be a microprocessor, or may be any conventional processor or the like.

It may be understood that the memory in embodiments of this application may be a volatile memory or a nonvolatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In several embodiments provided in this application, it should be understood that the disclosed system, apparatus, and method may be implemented in another manner. For example, the described apparatus embodiments are merely examples. For example, division into the units is merely logical function division and may be other division in actual implementation. For example, a plurality of modules or components may be combined. In addition, the displayed or discussed mutual coupling or communications connection may be an indirect coupling or communications connection implemented by using some interfaces, apparatuses, or units.

In addition, functional units in embodiments of this application may be integrated into one physical entity, or each of the units may correspond to one physical entity, or two or more units may be integrated into one physical entity.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

**Claims**

1. A beam training method, comprising:

   receiving first configuration information used for beam training, wherein the first configuration information is used to configure L codewords associated with M reference signals, each of the M reference signals is associated with at least one of the L codewords, and M and L are positive integers; and
   sending first indication information, wherein the first indication information indicates V codewords in the L codewords, V is a positive integer less than or equal to L, and the first indication information is determined based on measurement on the M reference signals and the L codewords.

2. The method according to claim 1, wherein the first configuration information comprises M first fields, and the M first fields are separately used to carry the codewords associated with the M reference signals.

3. The method according to claim 1 or 2, wherein that the first indication information indicates V codewords in the L codewords is specifically:

the first indication information comprises indexes of the V codewords, and an index of an $i^{th}$ codeword associated with an $m^{th}$ reference signal in the M reference signals is $\sum_{n=1}^{m-1} R_n + ( i - 1 )$ or $\sum_{n=1}^{m-1} R_n + i$ , wherein $i =$ 1,2,...,$R_m$, $R_m$ is a quantity of codewords associated with the $m^{th}$ reference signal, and $m = 1,2,...,M$ .

4. The method according to any one of claims 1 to 3, wherein that the first indication information indicates V codewords in the L codewords is specifically:
the first indication information indicates indexes of W reference signals and indexes of codewords associated with all of the W reference signals, wherein a $w^{th}$ reference signal in the W reference signals is associated with indexes of $v_w$ codewords, the W reference signals are reference signals in the M reference signals, $v_w$ is a positive integer, and $\sum_{w=1}^{W} v_w = V$ .

5. The method according to any one of claims 1 to 4, wherein the method further comprises:
sending third indication information, wherein the third indication information indicates at least one of first amplitude information and first energy information that correspond to the V codewords.

6. The method according to any one of claims 1 to 5, wherein the $m^{th}$ reference signal in the M reference signals has two ports, and the $m^{th}$ reference signal is measured based on the following assumptions, wherein $m = 1,2,...,M$:

a sent signal of a first port in the two ports is determined based on si; and/or
a sent signal of a second port in the two ports is determined based on $t_i \times s_2$, wherein $t_i$ is associated with the $i^{th}$ codeword of the $m^{th}$ reference signal, $i = 1,2,...,R_m$, and $s_1$ and $s_2$ are complex numbers determined based on reference signal sequences of the two ports.

7. The method according to any one of claims 1 to 6, wherein the first configuration information comprises a quantity $R_m$ of codewords associated with the $m^{th}$ reference signal in the M reference signals, $R_m$ is used to configure $R_m$ codewords associated with the $m^{th}$ reference signal, $R_m$ is a positive integer less than or equal to L, m is a positive integer less than or equal to M, and $\sum_{m=1}^{M} R_m = L$ .

8. A beam training method, comprising:

receiving second configuration information used for beam training, wherein the second configuration information is used to configure L spatial domain filter parameters and L codewords that are associated with M reference signals, each of the M reference signals is associated with at least one of the L codewords and at least one of the L spatial domain filter parameters, and M and L are positive integers; and
sending second indication information, wherein the second indication information indicates V spatial domain filter parameters in the L spatial domain filter parameters, V is a positive integer less than or equal to L, and the second indication information is determined based on measurement on the M reference signals, the L codewords, and the L spatial domain filter parameters.

9. The method according to claim 8, wherein the second configuration information comprises M second fields, and the M second fields are separately used to carry the spatial domain filter parameters and the codewords that are associated with configurations of the M reference signals.

10. The method according to claim 8 or 9, wherein the method further comprises:
sending fourth indication information, wherein the fourth indication information indicates at least one of second amplitude information and second energy information that correspond to the V spatial domain filter parameters.

11. The method according to any one of claims 8 to 10, wherein an $m^{th}$ reference signal in the M reference signals has two ports, and the $m^{th}$ reference signal is measured based on the following assumptions, wherein $m = 1,2,...,M$:

a sent signal of a first port in the two ports is determined based on $\Sigma \mathbf{b_i} \times s_1$, wherein $i = 1,2,...,R_m$; and/or
a sent signal of a second port in the two ports is determined based on $\Sigma t_i \mathbf{b_i} \times s_2$, wherein $t_i$ is associated with

an $i^{th}$ codeword of the $m^{th}$ reference signal, $i$ = 1,2,..,$R_m$, $s_1$ and $s_2$ are complex numbers determined based on reference signal sequences of the two ports, and $\mathbf{b}_i$ is an $i^{th}$ spatial domain filter parameter associated with the $m^{th}$ reference signal.

12. The method according to any one of claims 8 to 11, wherein the second configuration information comprises a quantity $R_m$ of codewords and a quantity $R_m$ of spatial domain filter parameters that are associated with the $m^{th}$ reference signal in the M reference signals, $R_m$ is used to configure $R_m$ codewords associated with the $m^{th}$ reference signal, $R_m$ is a positive integer less than or equal to L, m is a positive integer less than or equal to M, and

$$\sum\nolimits_{m=1}^{M} R_m = L .$$

13. A beam training method, comprising:

sending first configuration information used for beam training, wherein the first configuration information is used to configure L codewords associated with M reference signals, each of the M reference signals is associated with at least one of the L codewords, and M and L are positive integers; and
receiving first indication information, wherein the first indication information indicates V codewords in the L codewords, and V is a positive integer less than or equal to L.

14. The method according to claim 13, wherein the first configuration information comprises M first fields, and the M first fields are separately used to carry the codewords associated with the M reference signals.

15. The method according to claim 13 or 14, wherein that the first indication information indicates V codewords in the L codewords is specifically:
the first indication information comprises indexes of the V codewords, and an index of an $i^{th}$ codeword associated with an $m^{th}$ reference signal in the M reference signals is $\sum\nolimits_{n=1}^{m-1} R_n + (i-1)$ or $\sum\nolimits_{n=1}^{m-1} R_n + i$ , wherein $i$ = 1,2,...,$R_m$, $R_m$ is a quantity of codewords associated with the $m^{th}$ reference signal, and $m$ = 1,2,...,$M$ .

16. The method according to any one of claims 13 to 15, wherein that the first indication information indicates V codewords in the L codewords is specifically:
the first indication information indicates indexes of W reference signals and indexes of codewords associated with all of the W reference signals, wherein a $w^{th}$ reference signal in the W reference signals is associated with indexes of $v_w$ codewords, the W reference signals are reference signals in the M reference signals, $v_w$ is a positive integer, and $\sum\nolimits_{w=1}^{W} v_w = V$ .

17. The method according to any one of claims 13 to 16, wherein the method further comprises:
receiving third indication information, wherein the third indication information indicates at least one of first amplitude information and first energy information that correspond to the V codewords.

18. The method according to any one of claims 13 to 17, wherein the $m^{th}$ reference signal in the M reference signals has two ports, and the $m^{th}$ reference signal is sent based on the following criteria, wherein $m$ = 1,2,...,$M$ :

a sent signal of a first port in the two ports is determined based on $s_1$; and/or
a sent signal of a second port in the two ports is determined based on $t_i \times s_2$, wherein $t_i$ is associated with the $i^{th}$ codeword of the $m^{th}$ reference signal, $i$ = 1,2,...,$R_m$, and $s_1$ and $s_2$ are complex numbers determined based on reference signal sequences of the two ports.

19. The method according to any one of claims 13 to 18, wherein the first configuration information comprises a quantity $R_m$ of codewords associated with the $m^{th}$ reference signal in the M reference signals, $R_m$ is used to configure $R_m$ codewords associated with the $m^{th}$ reference signal, $R_m$ is a positive integer less than or equal to L, m is a positive integer less than or equal to M, and $\sum\nolimits_{m=1}^{M} R_m = L$ .

**20.** A beam training method, comprising:

sending second configuration information used for beam training, wherein the second configuration information is used to configure L spatial domain filter parameters and L codewords that are associated with M reference signals, each of the M reference signals is associated with at least one of the L codewords and at least one of the L spatial domain filter parameters, and M and L are positive integers; and
receiving second indication information, wherein the second indication information indicates V spatial domain filter parameters in the L spatial domain filter parameters, and V is a positive integer less than or equal to L.

**21.** The method according to claim 20, wherein the second configuration information comprises M second fields, and the M second fields are separately used to carry the spatial domain filter parameters and the codewords that are associated with configurations of the M reference signals.

**22.** The method according to claim 20 or 21, wherein the method further comprises:
receiving fourth indication information, wherein the fourth indication information indicates at least one of second amplitude information and second energy information that correspond to the V spatial domain filter parameters.

**23.** The method according to any one of claims 20 to 22, wherein an $m^{th}$ reference signal in the M reference signals has two ports, and the $m^{th}$ reference signal is sent based on the following criteria, wherein $m = 1,2,...,M$:

a sent signal of a first port in the two ports is determined based on $\Sigma \mathbf{b_i} \times s_1$, wherein $i = 1, 2,...,R_m$; and/or
a sent signal of a second port in the two ports is determined based on $\Sigma t_i \mathbf{b_i} \times s_2$, wherein $t_i$ is associated with an $i^{th}$ codeword of the $m^{th}$ reference signal, $i = 1,2,...,R_m$, $s_1$ and $s_2$ are complex numbers determined based on reference signal sequences of the two ports, and $\mathbf{b_i}$ is an $i^{th}$ spatial domain filter parameter associated with the $m^{th}$ reference signal.

**24.** The method according to any one of claims 20 to 23, wherein the second configuration information comprises a quantity $R_m$ of codewords and a quantity $R_m$ of spatial domain filter parameters that are associated with the $m^{th}$ reference signal in the M reference signals, $R_m$ is used to configure $R_m$ codewords associated with the $m^{th}$ reference signal, $R_m$ is a positive integer less than or equal to L, m is a positive integer less than or equal to M, and

$$\sum_{m=1}^{M} R_m = L$$

.

**25.** The method according to claim 7, 12, 19, or 24, wherein that $R_m$ is used to configure $R_m$ codewords associated with the $m^{th}$ reference signal is specifically:
the $i^{th}$ codeword in the $R_m$ codewords is determined based on $t_i = A \times \exp(j \times x_i)$, wherein $x_i = \alpha + 2\pi(i - 1)/R_m$, $i = 1,2,...,R_m$, $\alpha$ is a constant in $[0,2\pi]$, A is a complex constant, and $j = \sqrt{-1}$ .

**26.** The method according to claim 7, 12, 19, or 24, wherein that $R_m$ is used to configure $R_m$ codewords associated with the $m^{th}$ reference signal is specifically:
$R_m$ and a quantity M of reference signals are used to determine the $R_m$ codewords associated with the $m^{th}$ reference signal.

**27.** The method according to claim 26, wherein that $R_m$ and a quantity M of reference signals are used to determine the codewords associated with the $m^{th}$ reference signal is specifically:
the $i^{th}$ codeword in the $R_m$ codewords associated with the $m^{th}$ reference signal is determined based on $t_i = A \times \exp(j \times x_i + j \times \theta_m)$, wherein $\theta_m$ is a value in $[0,2\pi]$, $\theta_m$ is a value related to m and M, $\alpha$ is a constant in $[0,2\pi]$, A is a complex number, $j = \sqrt{-1}$ , $x_i = \alpha + 2\pi(i - 1)/R_m$, and $i = 1,2,...,R_m$.

**28.** The method according to claim 27, wherein

$\theta_m = 2m\pi/Y$, wherein Y is a prime number greater than or equal to M and $\max_m R_m$, and $\max_m R_m$ represents a largest value in $R_1, R_2,...,R_M$; or

if $R_1 = R_2 = ... = R_M = R$, $\theta_m = 2m\pi / MR$, wherein $m = 1,2,...,M$ .

29. The method according to any one of claims 1 to 28, wherein that each of the M reference signals is associated with at least one of the L codewords is specifically:
    at least one of the M reference signals is associated with at least two of the L codewords.

30. The method according to any one of claims 1 to 29, wherein at least one of the L codewords that is associated with each of the M reference signals is different from each other.

31. The method according to any one of claims 1 to 30, wherein the M reference signals are M CSI-RSs.

32. A beam training apparatus, comprising a unit configured to perform the method according to any one of claims 1 to 31.

33. A beam training apparatus, comprising a processor, wherein the processor is coupled to a memory, and the processor is configured to execute a computer program or instructions stored in the memory, to implement the method according to any one of claims 1 to 31.

34. A computer-readable storage medium, wherein the computer-readable storage medium stores a computer program, and when the computer program is run, the method according to any one of claims 1 to 31 is implemented.

Network device 110

Terminal device 120

FIG. 1

200

```
┌─────────────────┐                          ┌─────────────────┐
│  Second device  │                          │   First device  │
└────────┬────────┘                          └────────┬────────┘
         │                                            │
┌────────┴────────┐                                   │
│ S201: Group L beams │                               │
└────────┬────────┘                                   │
         │                                            │
         │     S202: Configure M reference signal     │
         ├────────────────resources───────────────────▶
         │                                            │
         │     S203: First configuration information  │
         ├──────(for configuring L codewords)─────────▶
         │                                            │
         │                                            │
         │     S204: Send M reference signals on the  │
         ├────────────configured resources────────────▶
         │                                            │
         │         S205: Report first indication      │
         ◀────────────────information──────────────────┤
         │                                            │
┌────────┴──────────────────┐                         │
│  S206: Estimate each beam  │                        │
│ between a network device and │                      │
│ a terminal device based on the │                    │
│  first indication information, │                    │
│  and determine one or more │                        │
│  beams for sending a signal │                       │
└────────┬──────────────────┘                         │
         │                                            │
```

FIG. 2

FIG. 3

FIG. 4

$T_{\text{period}}$

$T_M^E$

$T_1^E$

$T_{\text{period}}$

| RS(h, 1) | RS(h, 2) | ... | RS(h, M) |

$T_{\text{proc}}$

| RS(h+1, 1) |

$T_{\text{proc}}$

| ... | RS(h+1, M) |

$T_R$

FIG. 5

<u>300</u>

| Second device | | First device |
|---|---|---|

S301: Group L beams

S302: Configure M reference signal resources ⟶

S303: Second configuration information
(for configuring L spatial domain filter ⟶
parameters and L codewords)

S304: Send M reference signals
on the configured resources ⟶

S305: Measure the M
reference signals and
determine an effective
beam and a gain of the
effective beam

⟵ S306: Report second indication information
(indicating V spatial domain filter parameter indexes)

S307: Determine an effective beam
based on the V spatial domain filter
parameter indexes

FIG. 6

FIG. 7

FIG. 8

400

| Second device | | First device |

S401: Group L beams

S402: Configure M reference signal resource sets →

S403: Third configuration information
(for configuring L codewords) →

S404: Send M reference signals on the
configured resources →

← S405: Report fifth indication information

S406: Estimate each beam between
a network device and a terminal
device based on the fifth indication
information, and determine one or
more beams for sending a signal

FIG. 9

FIG. 10

Apparatus 500

Sending unit 510

Receiving unit 520

FIG. 11

Communications apparatus 600

Processor
610

Memory
630

Communications
interface 620

FIG. 12

## INTERNATIONAL SEARCH REPORT

| International application No. |
| --- |
| **PCT/CN2021/106454** |

| **A.** | **CLASSIFICATION OF SUBJECT MATTER** |
| --- | --- |

H04W 72/04(2009.01)i

According to International Patent Classification (IPC) or to both national classification and IPC

| **B.** | **FIELDS SEARCHED** |
| --- | --- |

Minimum documentation searched (classification system followed by classification symbols)

H04W; H04L

Documentation searched other than minimum documentation to the extent that such documents are included in the fields searched

Electronic data base consulted during the international search (name of data base and, where practicable, search terms used)

WPI; EPODOC; CNKI; CNPAT; 3GPP: 波束, 空间滤波参数, 空间参数, 训练, 参考信号, 码字, 测量, 指示, 关联, 对应, beam, spatial w domain w filter w parameter, spatial w filter, spatial w parameter, train+, reference w signal, codeword, measure +, indicat+, associat+, connected, related

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 107171705 A (SOUTHEAST UNIVERSITY) 15 September 2017 (2017-09-15) description, paragraphs [0040]-[0043] | 1-34 |
| A | CN 107294568 A (BEIJING XINWEI TELECOM TECHNOLOGY INC.) 24 October 2017 (2017-10-24) entire document | 1-34 |
| A | HUAWEI et al. "Details of QCL assumptions and related RS design considerations" *3GPP TSG RAN WG1 NR Ad Hoc Meeting R1-1700072*, 20 January 2017 (2017-01-20), entire document | 1-34 |
| A | US 2020007222 A1 (INTEL IP CORPORATION) 02 January 2020 (2020-01-02) entire document | 1-34 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **29 September 2021** | **14 October 2021** |

| Name and mailing address of the ISA/CN | Authorized officer |
| --- | --- |
| **China National Intellectual Property Administration (ISA/ CN)** **No. 6, Xitucheng Road, Jimenqiao, Haidian District, Beijing 100088 China** | |
| Facsimile No. **(86-10)62019451** | Telephone No. |

Form PCT/ISA/210 (second sheet) (January 2015)

## INTERNATIONAL SEARCH REPORT
### Information on patent family members

International application No.

**PCT/CN2021/106454**

| Patent document cited in search report | | | Publication date (day/month/year) | Patent family member(s) | | | Publication date (day/month/year) |
|---|---|---|---|---|---|---|---|
| CN | 107171705 | A | 15 September 2017 | None | | | |
| CN | 107294568 | A | 24 October 2017 | None | | | |
| US | 2020007222 | A1 | 02 January 2020 | EP | 3588805 | A1 | 01 January 2020 |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202011568911

- CN 202010699812